# EUROPÄISCHE PATENTANMELDUNG

(11) **EP 4 451 073 A1**
(43) Veröffentlichungstag der Anmeldung: **23.10.2024**
(21) Anmeldenummer: 23168372.3
(22) Anmeldetag: 18.04.2023
(51) Int. Cl.: G05B 19/418

(54) **BEARBEITUNGSSYSTEM UND VERFAHREN FÜR DIE BEARBEITUNG EINES AUF EINER TRANSPORTEINRICHTUNG TRANSPORTIERTEN VERARBEITUNGS-PRODUKTS**

(71) Anmelder: Siemens Aktiengesellschaft, 80333 München (DE)
(72) Erfinder: Gigler, Alexander Michael, 86836 Untermeitingen (DE); Höffernig, Martin, 8045 Graz (AT); Kessler, Alexander, 90408 Nürnberg (DE); Thon, Ingo, 85630 Grasbrunn (DE)
(74) Vertreter: Siemens Patent Attorneys

(57) **Zusammenfassung**

Die vorliegende Erfindung betrifft ein Steuerungssystem (200) für die Bearbeitung eines auf einer Transporteinrichtung (110) von einer ersten zu einer zweiten Sensorkomponente (122, 124, 126) und weiterhin zu einer Bearbeitungskomponente (150) transportierten Verarbeitungs-Produkts (112, 114, 118), umfassend:
eine Steuereinrichtung (220) mit
- mindestens einem Applikationsmodul (224, 226, 228) zum Anschluss der ersten Sensorkomponente (122, 124, 126) und der zweiten Sensorkomponente (122, 124, 126),
- sowie einem Steuerungsmodul (222),

wobei die erste und zweite Sensorkomponente (122, 124, 126) zur Erfassung von ersten und zweiten Sensordaten bezüglich des Verarbeitungs-Produkts (112, 114, 118), die Bearbeitungskomponente (150) zum Bearbeiten, Verarbeiten und/oder Manipulieren des Verarbeitungs-Produkts (112, 114, 118), und das Steuerungsmodul (222) zum Ablauf eines Steuerprogramms zur Steuerung der Bearbeitungskomponente (150) ausgebildet und eingerichtet ist,
wobei das Steuerungssystem (200) weiterhin eine Edge-Recheneinrichtung (210) umfasst, welche zur Ermittlung mindestens einer Zeitinformation ausgebildet und eingerichtet ist, wobei aus der mindestens einen Zeitinformation Transportzeiten eines auf der Transporteinrichtung transportierten Produkts (112, 114, 116, 118) von der ersten zur zweiten Sensorkomponente (122, 124, 126) und weiter zur Bearbeitungskomponente (150) ermittelbar sind oder ermittelt werden,
und wobei das Steuerungsmodul (222) zum Ablauf eines Steuerprogramms zur Echtzeitsteuerung der Bearbeitungskomponente (150) zur Bearbeitung des Verarbeitungsprodukts (112, 114, 118) unter Berücksichtigung der ersten und zweiten Sensordaten sowie der Zeitinformation und/oder der ermittelten Transportzeiten ausgebildet und eingerichtet ist.

## Beschreibung

Die vorliegende Erfindung betrifft ein Steuerungssystem sowie ein Verfahren für die Bearbeitung eines auf einer Transporteinrichtung von einer ersten zu einer zweiten Sensorkomponente und weiterhin zu einer Bearbeitungskomponente transportierten Verarbeitungs-Produkts, umfassend eine Steuereinrichtung mit mindestens einem Analysemodul zum Anschluss der ersten Sensorkomponente und der zweiten Sensorkomponente und mit einem Steuerungsmodul.

Derartige Systeme sind aus dem Stand der Technik bekannt.

So offenbart beispielsweise das US-Patent US 11,278,937 ein Material-Sortiersystem umfassend verschiedene Sensoren sowie ein Kamerasystem, um verschiedene Materialien zu identifizieren und Klassifizieren. Das Sortiersystem umfasst ein Förderband, auf welchem die zu sortierenden Teil entlang der verschiedenen Sensoren bewegt und dann in einer Sortierstation nach den verschiedenen Materialien sortiert werden. Dabei wird über einen Geschwindigkeitssensor die Geschwindigkeit des Förderbandes gemessen, um anhand der Geschwindigkeit der darauf befindlichen Gegenstände dann die Sensor-Signale der einzelnen Sensoren bestimmten Gegenständen zuzuordnen.

Es ist ein Nachteil des genannten Standes der Technik, dass ein solches Verfahren beispielsweise nur bei einteiligen Transportbändern funktioniert und nicht z.B. bei der Verwendung Multi-Carrier-Systemen, autonomen mobilen Transportsystemen oder Robotern als Transportmedium.

Daher ist es eine Aufgabe der vorliegenden Erfindung, ein zum Sortieren und/oder Bearbeiten von auf einer Transporteinrichtung transportierten Gegenständen ausgebildetes eingerichtetes System und/oder Verfahren zur Verfügung zu stellen, welches flexibler und einfacher anpassbar ist.

Diese Aufgabe wird gelöst durch ein System mit den Merkmalen des Patentanspruchs 1.

Ein solches Steuerungssystem ist für die Bearbeitung eines von einer Transporteinrichtung von einer ersten zu einer zweiten Sensorkomponente und weiterhin zu einer Bearbeitungskomponente transportierten Verarbeitungs-Produkts ausgebildet und umfasst:
eine Steuereinrichtung mit
   - mindestens einem Applikationsmodul zum Anschluss der ersten Sensorkomponente und der zweiten Sensorkomponente,
   - sowie einem Steuerungsmodul,
wobei die erste und zweite Sensorkomponente zur Erfassung von ersten und zweiten Sensordaten bezüglich des VerarbeitungsProdukts, die Bearbeitungskomponente zum Bearbeiten, Verarbeiten und/oder Manipulieren des Verarbeitungs-Produkts, und das Steuerungsmodul zum Ablauf eines Steuerprogramms zur Steuerung der Bearbeitungskomponente ausgebildet und eingerichtet ist,
wobei das Steuerungssystem weiterhin eine Edge-Recheneinrichtung umfasst, welche zur Ermittlung mindestens einer Zeitinformation ausgebildet und eingerichtet ist, wobei aus der mindestens einen Zeitinformation Transportzeiten eines von der Transporteinrichtung transportierten Produkts von der ersten zur zweiten Sensorkomponente und weiter zur Bearbeitungskomponente ermittelbar sind oder ermittelt werden, und wobei das Steuerungsmodul zum Ablauf eines Steuerprogramms zur Echtzeitsteuerung der Bearbeitungskomponente zur Bearbeitung des Verarbeitungsprodukts unter Berücksichtigung der ersten und zweiten Sensordaten sowie der Zeitinformation und/oder der ermittelten Transportzeiten ausgebildet und eingerichtet ist.

Dadurch, dass die Edge-Recheneinrichtung nicht Teil der Steuereinrichtung ist und weiterhin zur Ermittlung der Zeitinformation ausgebildet und eingerichtet ist, ist es möglich, jederzeit eine neue Kalibrierung des Steuerungssystems vorzunehmen, ohne dessen Echtzeiteigenschaften, die durch den Ablauf des Steuerprogramms in der Steuereinrichtung maßgeblich bestimmt werden, dadurch zu beeinträchtigen. Dadurch wird es möglich, das System flexibler an verschiedene Transportsysteme oder Transportmedien anpassbar zu machen. Weiterhin ist das Steuerungssystem auf diese Weise einfacher und flexibler an veränderte Transportparameter anpassbar.

In vielen industriellen Anlagen müssen zum Lösen einer Automatisierungsaufgabe Informationen aus mehreren Datenquellen kombiniert werden. Informationen die sich auf ein "Produkt" (z.B. ein spezifisches Auto), ein "Objekt" (z.B. eine Zuckerrübe auf einem Schüttgut-Transportband) oder einen Abschnitt (Fertigungszentimeter 2019 bei Glas) beziehen, werden oftmals zu verschiedenen Zeitpunkten an unterschiedlichen Positionen der Fertigung aufgenommen. Die Problemstellung besteht dabei darin, diese Informationen korrekt in Korrelation mit dem betreffenden Objekt/Produkt zu bringen, die Kombination der Daten korrekt zu interpretieren und die resultierenden Aktionen und/oder Reaktionen zeitlich korrekt auszuführen. Heute werden Daten, die an einer Sensorstation erhoben werden, in der Regel unmittelbar an oder im unmittelbaren Umfeld dieser Sensorstation genutzt, z.B. um Gegenstände gezielt zu greifen, zu bearbeiten, zu sortieren und/oder auszusortieren. Danach werden die Daten verworfen.

Beispielhaft in Bezug auf Recyclinganlagen, bei welchen z.B. die zu recycelnden Gegenständen auf einem Band transportiert und sortiert bzw. aussortiert werden sollen, werden einige Problematiken nachfolgend näher erläutert.

Eine typische Sensorik, die entlang des solchen Transportbandes verteilt sein kann, kann sich beispielsweise aus den nachfolgenden Komponenten zusammensetzen:
- einer hyperspektrale Zeilenkamera, die über maschinelles Lernen befähigt ist, Materialien zu klassifizieren (z.B.: Kunststoffarten),
- einem Magnetsensor zur Unterscheidung metallischer von nicht-metallischen Objekten,
- einer RGB-Kamera zur Erkennung von Formen und Bestimmung von Größen evtl. sogar als 2.5D oder 3D-Kamera um Volumina zu bestimmen.

Eine Aktorik ist häufig für eine Müllsortierung notwendig und kann ausgeführt sein als einer oder mehrere Delta-Picker, 6-Achs-Roboter oder z.B. Druckluft-basierter Sortierer an einer Abwurfstelle.

Ein Kernproblem kann dabei sein, wie oben beschrieben, die konzertierte Erfassung, Verarbeitung und deterministische Reaktion des Systems auf das vorliegende Transportgut, während das Zusammenspiel gerade unter variierenden Transportgeschwindigkeiten komplex wird.

Die Einbindung von komplexen Sensoren, die von mehreren Stellen der Fertigungsanlage zu unterschiedlichen Zeiten Daten erheben, muss zur zeitdiskreten Ansteuerung einer Aktorik koordiniert werden. Häufig kann die Datenlast auf Grund von Umfang und Häufigkeit, z.B. durch hochauflösende und schnelle Kameras, ein großes Problem für die vorliegende Infrastruktur sein, was einen nicht unbeträchtlichen Aufwand auch für die zeitliche Orchestrierung der Aktorik bedeutet.

Hier bietet ein Steuerungssystem, ein Bearbeitungssystem, ein Verfahren zum Einrichten eines Steuerungssystems und/oder ein Verfahren zum Bearbeiten eines Verarbeitungs-Produkts gemäß der vorliegenden Beschreibung eine Möglichkeit, die genannten Problematiken durch ihre Flexibilität und einfachere Anpassbarkeit zu reduzieren oder sogar zu lösen. Insbesondere die Verwendung einer Edge-Recheneinrichtung zur häufig aus den vorstehend genannten Gründen aufwändigen Ermittlung der Zeitinformation bzw. der genannten Transportzeiten entlastet die Steuereinrichtung von diesen Aufgaben und ermöglicht eine schnellere, planbarere, flexiblere und/oder ungestörtere Echtzeitsteuerung der Bearbeitungskomponente vermittels der Steuereinrichtung.

Die Transporteinrichtung kann dabei derart ausgebildet, angeordnet und eingerichtet sein, dass das darauf transportierte Verarbeitungs-Produkt im Verlauf des Transports von der ersten und zweiten Sensorkomponente erfassbar ist oder erfasst wird, und im weiteren Verlauf des Transports durch die Bearbeitungskomponente bearbeitbar ist oder bearbeitet wird.

Die Transporteinrichtung kann beispielsweise als ein Förderband, ein Transportband, eine Hängebahn mit mehreren Trageund/oder Greif-Elementen, ein sogenanntes "Multi Carrier System" bestehend aus mehreren z.B. auf einem Schienensystem voneinander abhängig oder unabhängig bewegbaren Trägerelementen, ein oder mehrere Roboter, ein AGV-System (AGV: Autonomous Guided Vehicles) mit einem oder mehreren AGV, ein AMR-System (AMR: Autonomous Mobile Robots) mit einem oder mehreren mobilen Robotern, oder als vergleichbare Einrichtungen ausgestaltet sein oder derartige Einrichtungen umfassen.

Dabei kann die Transporteinrichtung beispielsweise derart ausgebildet und eingerichtet sein, dass mehrere nacheinander oder parallel darauf transportierte Verarbeitungs-Produkte oder Gegenstände denselben Transportweg vornehmen. Dabei können bzw. müssen beispielsweise bei einem AGV- oder AMR-System die einzelnen AGV oder AMR derart ausgebildet und eingerichtet sein, dass jeder der einzelnen Transportelemente immer den gleichen Weg vornimmt. Bei einem Transportband oder einem Multicarrier-System mit starrem Schienen- oder Führungssystem ist dies in der Regel gegeben.

Die Transporteinrichtung kann z.B. auch derart ausgebildet und eingerichtet sein, dass mehrere nacheinander oder parallel darauf transportierte Verarbeitungs-Produkte oder Gegenstände bei ihrem Transport dieselbe Zeit von der ersten zur zweiten Sensorkomponente und dieselbe Zeit von der zweiten Sensorkomponente zum Bearbeitungssystem benötigen. Die Transporteinrichtung kann weiterhin derart ausgebildet und eingerichtet sein, dass mehrere nacheinander oder parallel darauf transportierte Verarbeitungs-Produkte oder Gegenstände den Transportweg mit der gleichen Geschwindigkeit oder dem gleichen Geschwindigkeitsprofil oder -verlauf abfahren.

Dabei können beispielsweise bei einem Multi-Carrier-, AGVoder AMR-System die einzelnen Trägerelemente, AGV bzw. AMR derart ausgebildet und eingerichtet sein, dass jedes beim Transport eines Verarbeitungs-Produkts bzw. Gegenstands von der ersten zur zweiten Sensorkomponente und weiter zum Bearbeitungssystem jeweils die gleichen Transportzeiten zwischen erster und zweiter Sensorkomponenten und weiter zur Bearbeitungssystem benötigen und/oder das gleiche Geschwindigkeitsprofil bzw. den gleichen Geschwindigkeitsverlauf haben. Bei einem Transportband ist dies in der Regel gegeben.

In einer vorteilhaften Ausgestaltung kann die Transporteinrichtung weiterhin derart ausgebildet und eingerichtet sein, dass mehrere nacheinander oder parallel darauf transportierte Verarbeitungs-Produkte oder Gegenstände sowohl denselben Transportweg vornehmen als auch den Transportweg mit der gleichen Geschwindigkeit oder dem gleichen Geschwindigkeitsprofil oder -verlauf abfahren.

Weiterhin kann das Steuerungssystem auch für die Bearbeitung eines auf einer Transporteinrichtung von einer ersten zu einer zweiten Sensorkomponente und weiter zu mindestens einer dritten Sensorkomponente und dann weiterhin zu einer Bearbeitungskomponente und gegebenenfalls mindestens einer weiteren Bearbeitungskomponente transportierten oder transportierbaren Verarbeitungs-Produkts ausgebildet und eingerichtet sein.

Dabei ist die mindestens eine dritte Sensorkomponente zur Erfassung von dritten und gegebenenfalls weiteren Sensordaten bezüglich des Verarbeitungsprodukts ausgebildet. Weiterhin kann die mindestens eine dritte Sensorkomponente gemäß einer ersten und/oder zweiten Sensorkomponente gemäß der vorliegenden Beschreibung ausgebildet und eingerichtet sein. Die dritten und gegebenenfalls weiteren Sensordaten können gemäß ersten und/oder zweiten Sensordaten gemäß der vorliegenden Beschreibung ausgebildet und eingerichtet sein. In dieser Ausgestaltung ist das mindestens eine Applikationsmodul dann zum Anschluss der ersten Sensorkomponente, der zweiten Sensorkomponente und der mindestens einen dritten Sensorkomponente ausgebildet und eingerichtet.

Dabei kann jede der gegebenenfalls mindestens einen weiteren Bearbeitungskomponente gemäß einer Bearbeitungskomponente gemäß der vorliegenden Beschreibung ausgebildet und eingerichtet sein. Weiterhin kann in diesem Fall das Steuerungsmodul zum Ablauf eines Steuerprogramms zur Echtzeitsteuerung der Bearbeitungskomponente sowie der gegebenenfalls mindestens einen weiteren Bearbeitungskomponente ausgebildet und eingerichtet sein.

Die Edge-Recheneinrichtung kann in diesem Fall dann zur Ermittlung mindestens einer Zeitinformation ausgebildet und eingerichtet sein, wobei aus der mindestens einen Zeitinformationstransportzeiten eines auf der Transporteinrichtung transportierten Produkts von der ersten zur zweiten weiterhin zu einer eventuell vorhandenen mindestens einen dritten Sensorkomponente und dann weiter zur Bearbeitungskomponente und gegebenenfalls der mindestens einen weiteren Bearbeitungskomponente ermittelbar sind oder ermittelt werden.

Das Steuerungsmodul ist dann zum Ablauf eines Steuerprogramms zur Echtzeitsteuerung der Bearbeitungskomponente sowie gegebenenfalls der mindestens einen weiteren Bearbeitungskomponente zur Bearbeitung des Verarbeitungsprodukts ausgebildet und eingerichtet.

Sensordaten im Sinne der vorliegenden Erfindung können alle Daten sein, die von einer Sensorkomponente gemäß der vorliegenden Erfindung ausgegeben werden oder ausgegeben werden können. Weiterhin können Sensordaten auch Daten sein, welche aus unmittelbar von einer Sensorkomponente stammenden Daten nach beispielsweise einem Verarbeitungsschritt gewonnenen Daten bestehen oder solche umfassen. Solche Verarbeitungsschritte können beispielsweise eine Vorverarbeitung von vom Sensor stammenden Daten umfassen, wie beispielsweise eine Normierung, eine Umrechnung, eine Zeitstempelung oder sonstige typische Verarbeitung- und/oder vor Verarbeitungsschritte von Sensordaten sein.

Dass das Steuerungsmodul zum Ablauf eines Steuerprogramms zur Echtzeitsteuerung der Bearbeitungskomponente unter Berücksichtigung von Sensordaten ausgebildet und eingerichtet ist, kann derart ausgebildet und eingerichtet sein, dass unmittelbar von einer Sensorkomponente stammende Sensordaten im Rahmen der Echtzeitsteuerung berücksichtigt werden und/oder dass auch nach einem Vorverarbeitung- und/oder Verarbeitungsschritt erzeugte Daten in die Echtzeitsteuerung einfließen. Weiterhin kann vorgesehen sein, dass die Echtzeitsteuerung unter Berücksichtigung der Sensordaten derart ausgebildet und eingerichtet ist, dass durch Analyse der Sensordaten weitere Informationen, beispielsweise Produktinformationen gemäß der vorliegenden Beschreibung, erzeugt werden und das Steuerungsmodul zum Ablauf eines Steuerprogramms zur Echtzeitsteuerung der Bearbeitungskomponente unter Berücksichtigung der Sensordaten derart ausgebildet und eingerichtet ist, dass dabei zumindest unter anderem die Produktinformationen oder die weiteren Informationen berücksichtigt werden oder Anwendung finden.

Eine Sensorkomponente gemäß der vorliegenden Beschreibung kann beispielsweise als eine Kamera (z.B. hyperspektrale Zeilenkamera oder RGB-Kamera), ein optischer-Liniensensor, ein optischer Sensor, ein Magnet-Sensor, ein Bewegungssensor, ein Ortssensor, ein Material-Sensor, ein Berührungssensor, und/oder jegliche Art von sonstigem Sensor ausgebildet und eingerichtet sein.

Die erste und zweite Sensorkomponente sowie die mindestens eine dritte Sensorkomponente kann beispielsweise ausgebildet und eingerichtet sein als
- eine hyperspektrale Zeilenkamera, die über maschinelles Lernen befähigt ist, Materialien zu klassifizieren (z.B.: Kunststoffarten),
- ein Magnetsensor zur Unterscheidung metallischer von nicht-metallischen Objekten, und/oder
- eine RGB-Kamera zur Erkennung von Formen und Bestimmung von Größen, die evtl. sogar als 2.5D oder 3D-Kamera ausgebildet und eingerichtet sein kann, um z.B. Volumina zu bestimmen.

Sensordaten können alle von einer Sensorkomponente gemäß der vorliegenden Beschreibung ausgegebene und/oder an ein externes Gerät, wie z.B. ein Applikationsmodul gemäß der vorliegenden Beschreibung, übermittelte Daten sein. Solche Sensordaten können beispielsweise sein: optische Daten (z.B.0D-Daten, 1D-Daten, 2D-Bild, 3D-Bild), elektrische Eigenschaften oder Informationen (z.B. Widerstand, Leitfähigkeit, ...), magnetische Eigenschaften oder Informationen, Volumen-Messgrößen, Flächen-Messgrößen, Zustandsdaten (z.B. Druck, Temperatur, ...), Bewegungsparameter (z.B. Ort, Geschwindigkeit, Durchfluss-Menge, Durchfluss-Geschwindigkeit, ...) oder sonstige Sensordaten sein. Auch können Sensordaten z.B. alle aus den vorstehend genannten Daten durch Vorverarbeitung oder weitere Verarbeitung oder Analyse gewonnenen Daten sein oder solche Daten umfassen.

Die Bearbeitungskomponente und/oder die mindestens eine weitere Bearbeitungskomponente kann jegliche Art von Vorrichtung sein, die eine Aktivität an und/oder mit dem Verarbeitungsprodukt vornehmen kann oder vornimmt. Die Bearbeitungskomponente kann beispielsweise als ein Roboter (z.B. ein Delta-Picker oder 6-Achs-Roboter), eine Druckluft-Einrichtung (z.B. Druckluft-basierter Sortierer), eine Bearbeitungsmaschine, eine Werkzeugmaschine, ein Ofen, oder jede weitere Art von für ein Verarbeitungs-Produkt geeignete Bearbeitungs- oder Verarbeitungs-Vorrichtung sein.

Das Verarbeitungsprodukt kann ein Produkt, ein Gegenstand, eine Baugruppe, ein Element, eine mechanische Komponente o. ä. sein, welches zu einer Bearbeitung und/oder Verarbeitung vorgesehen ist, bearbeitet und/oder verarbeitet wird, und/oder bearbeitbar und/oder verarbeitbar ist. Unter einer Bearbeitung oder Verarbeitung wird dabei beispielsweise eine Assemblierung, Montage, Zusammenbau oder Herstellung eines Produkts oder Zwischenprodukts verstanden, oder auch ein Bearbeiten, Verformen, Verändern, Sortieren, Auswählen, Greifen oder Handhaben des Verarbeitungsprodukts oder auch ein Auseinanderbauen, Recyceln und/oder Demontieren des Verarbeitungsprodukts oder Teilen davon.

Die Steuereinrichtung kann jede Art von Computer oder Computersystem sein, welcher zur Steuerung eines Apparats, einer Maschine, einer Anlage oder Geräts ausgebildet und eingerichtet ist. Bei der Steuerung kann es sich auch um einen Computer, ein Computersystem oder eine sogenannte "Cloud" handeln, auf der eine Steuerungssoftware oder eine Steuerungssoftware-Anwendung, zum Beispiel eine Steuerungsanwendung, implementiert, instanziiert bzw. installiert ist. Eine solche auf einem Computer oder in einer Cloud implementierte Steuerungsanwendung kann z.B. als eine oder mehrere Applikationen mit der Funktionalität einer speicherprogrammierbaren Steuerung ausgebildet und eingerichtet sein.

Die Steuereinrichtung kann weiterhin auch als ein sogenanntes Edge-Device ausgebildet und eingerichtet sein, wobei ein solches Edge-Device beispielsweise eine Applikation zur Steuerung von Vorrichtungen oder Anlagen umfassen kann. Beispielsweise kann eine solche Applikation als eine Applikation mit der Funktionalität einer speicherprogrammierbaren Steuerung ausgebildet und eingerichtet sein. Das Edge-Device kann dabei beispielsweise mit einer weiteren Steuereinrichtung einer Vorrichtung oder Anlage verbunden sein oder auch unmittelbar mit einer zu steuernden Vorrichtung oder Anlage. Weiterhin kann das Edge-Device derart ausgebildet und eingerichtet sein, dass es zusätzlich noch mit einem Datennetzwerk oder einer Cloud verbunden ist bzw. zur Verbindung mit einem entsprechenden Datennetzwerk oder einer entsprechenden Cloud ausgebildet und eingerichtet ist.

Die Steuereinrichtung kann beispielsweise auch als eine sogenannte speicherprogrammierbare Steuerung (SPS) ausgebildet und eingerichtet sein (im Englischen "programmable logic controller" bzw. PLC). Weiterhin kann die Steuerungseinrichtung auch als eine sogenannte modulare speicherprogrammierbare Steuerung (modulare SPS) eingerichtet und ausgestaltet sein.

Das Steuerungsmodul kann dabei eine Komponente der Steuereinrichtung sein, welche zum Ablauf eines Steuerprogramms ausgebildet und eingerichtet ist. Dabei kann das Steuerungsmodul beispielsweise eine durch den Standard IEC 61131 definierte Funktionalität umfassen.

Dabei kann das Steuerungsmodul beispielsweise als eine Software-Applikation ausgebildet und eingerichtet sein, welche zum Echtzeit-Ablauf eines Steuerprogramms zur Steuerung der Bearbeitungskomponente ausgebildet und eingerichtet ist. Dabei kann die Software-Applikation beispielsweise eine im Standard IEC 61131 und/oder IEC 61499 definierte Funktionalität umfassen.

Das Steuerungsmodul kann weiterhin auch als ein separates elektronisches Modul oder eine separate Baugruppe ausgebildet und eingerichtet sein, welche zum Echtzeitablauf eines Steuerprogramms ausgebildet und eingerichtet ist. Auch ein solches elektronisches Modul bzw. eine derartige Baugruppe kann beispielsweise eine durch den Standard IEC 61131 und/oder IEC 61499 definierte Funktionalität umfassen. Beispielsweise kann das Steuerungsmodul als speicherprogrammierbare Steuerung selbst oder beispielsweise als ein Zentralmodul einer modularen speicherprogrammierbaren Steuerung ausgebildet und eingerichtet sein. Dabei kann das Steuerungsmodul beispielsweise eine Funktionalität einer Eingabe-Ausgabe-Baugruppe umfassen oder auch keine Funktionalität einer Eingabe-Ausgabe-Baugruppe umfassen.

Bei einer speicherprogrammierbaren Steuerung, kurz SPS, handelt es sich um eine Komponente, die programmiert und eingesetzt wird, um eine Anlage oder Maschine zu regeln bzw. zu steuern. In SPS können spezifische Funktionen wie beispielsweise eine Ablaufsteuerung implementiert werden, so dass auf diese Weise sowohl die Eingangs- als auch die Ausgangssignale von Prozessen oder Maschinen gesteuert werden können. Definiert wird die speicherprogrammierbare Steuerung beispielsweise im Standard IEC 61131 und/oder IEC 61499.

Um eine speicherprogrammierbare Steuerung an die Anlage bzw. Maschine anzubinden, kommen sowohl Aktoren, die im Allgemeinen an den Ausgängen der speicherprogrammierbaren Steuerung angeschlossen sind, als auch Sensoren zum Einsatz. Des Weiteren werden Statusanzeigen verwendet. Grundsätzlich befinden sich die Sensoren an den SPS-Eingängen, wobei durch sie die speicherprogrammierbare Steuerung Informationen darüber erhält, was in der Anlage bzw. Maschine vonstattengeht. Als Sensoren gelten beispielsweise: Lichtschranken, Endschalter, Taster, Inkrementalgeber, Füllstandsensoren, Strömungssensoren, Drucksensoren, Temperaturfühler oder vergleichbare Sensoren. Als Aktoren gelten z.B.: Schütze (z.B. zum Einschalten elektrischer Motoren), elektrische Ventile für Druckluft oder Hydraulik, Antriebssteuerungsmodule, Motoren, Antriebe.

Die Realisierung eine SPS kann auf verschiedene Art und Weise erfolgen. Das heißt, sie kann als elektronisches Einzelgerät, als modulares elektronisches Gerät, als Softwareemulation, als sogenannte "virtuelle PLC" oder "Soft-PLC", als PC-Einsteckkarte oder ähnliches verwirklicht werden. Häufig finden sich auch modulare Lösungen, im Rahmen derer die SPS aus mehreren Steckmodulen zusammengebaut wird. Solche Module können beispielsweise ein zentrales Steuerungsmodul, ein Eingabe-Ausgabe-Modul, ein Kommunikationsmodul, ein Umrichter Modul, ein Applikationsmodul oder vergleichbare Module sein.

Unter einer virtuellen PLC oder einer sogenannten Soft-PLC wird eine speicherprogrammierbare Steuerung verstanden, welche als Softwareapplikation realisiert ist und auf einer Computereinrichtung, einem Industrie-PC oder sonstigen PC, einer Recheneinrichtung, oder z.B. auch einem EDGE Device, ablaufen kann oder abläuft. Auch in diesem Fall gibt es die Möglichkeit eine virtuelle PLC oder Soft-PLC modular auszuführen. Dabei werden dann einzelne Funktionalitäten einer speicherprogrammierbaren Steuerung bzw. PLC als einzelne Software-Module ausgestaltet, welche über eine sogenannte Middleware verbunden oder verbindbar sind.

Solche Module können beispielsweise ein zentrales Steuerung-Software Modul (z.B. umfassend zumindest unter anderem eine vom Standard IEC 61131 vorgegebenen Funktionalität) sein oder umfassen. Module können auch Kommunikationsmodule zur Ankopplung an einen Feldbus, an bestimmte Geräte oder Vorrichtungen, an ein Ethernet, einen OPC-UA oder vergleichbare Kommunikationsstandards, ein Webserver-Modul, ein HMI-Modul (HMI: human machine interface) und/oder ein Funktionsmodul oder Applikationsmodul gemäß der vorliegenden Beschreibung sein oder umfassen.

Eine modulare speicherprogrammierbare Steuerung kann dabei derart ausgebildet und eingerichtet sein, dass mehrere Module vorgesehen sein können oder sind, wobei in der Regel neben einem sogenannten Zentralmodul (das auch als Steuerungs-Zentralmodul oder CPU bezeichnet wird) das zum Ablauf eines Steuerprogramms z.B. zur Steuerung einer Komponente, Maschine oder Anlage (bzw. eines Teils davon) ausgebildet und eingerichtet ist, ein oder mehrere Erweiterungsmodule vorgesehen sein können. Solche Erweiterungsmodule können beispielsweise als eine Strom-/Spannungsversorgung ausgebildet und eingerichtet sein oder auch zur Ein- und/oder Ausgabe von Signalen oder weiterhin auch als ein Funktionsmodul oder Applikationsmodul ausgebildet und eingerichtet sein.

Ein Applikationsmodul gemäß der vorliegenden Beschreibung kann z.B. als ein Ein-Ausgabe-Modul ausgebildet und eingerichtet sein oder eine derartige Funktionalität umfassen. Weiterhin kann ein Applikationsmodul gemäß der vorliegenden Beschreibung beispielsweise zur Übernahme spezieller Aufgaben und/oder zur Zurverfügungstellung spezieller Funktionalitäten ausgebildet und eingerichtet sein oder derartige Funktionalitäten umfassen. Solche speziellen Aufgaben oder Funktionalitäten können beispielsweise sein oder umfassen: ein Zähler, ein Umrichter, Sensordaten-Verarbeitung, Sensordaten-Vorverarbeitung, Zeitstempelung, Datenanalyse, Bildverarbeitung, Videoverarbeitung, und/oder Datenverarbeitung mit künstliche-Intelligenz-Methoden (z.B. unter Verwendung eines neuronalen Netzes oder eines anderen ML-Modells).

Beispielsweise kann ein Funktionsmodul oder Applikationsmodul auch als ein AI-Modul oder ML-Modul zur Ausführung von Aktionen unter Verwendung künstlicher Intelligenz-Verfahren oder maschineller Lernverfahren ausgebildet und eingerichtet sein. Ein solches Funktionsmodul kann beispielsweise ein Neuronales Netz oder ein ML-Modell gemäß der vorliegenden Beschreibung gemäß der vorliegenden Beschreibung umfassen.

Dabei kann das mindestens eine Applikationsmodul ein Applikationsmodul umfassen, welches sowohl zum Anschluss der ersten als auch der zweiten Sensorkomponente ausgebildet, eingerichtet und vorgesehen ist. Weiterhin kann beispielsweise vorgesehen sein, dass das mindestens eine Applikationsmodul ein erstes Applikationsmodul zum Anschluss der ersten Sensorkomponente sowie ein zweites Applikationsmodul zum Anschluss der zweiten Sensorkomponente umfasst.

Ein Applikationsmodul kann beispielsweise als ein HardwareModul ausgebildet und eingerichtet sein, beispielsweise ein Hardwaremodul für eine speicherprogrammierbare Steuerung. Ein solches Hardwaremodul kann beispielsweise als baulich eigenständiges Modul ausgebildet und eingerichtet sein. Ein solches baulich eigenständiges Hardwaremodul kann beispielsweise ein Gehäuse aufweisen und/oder mechanische Elemente oder Vorrichtungen zur Kopplung mit der Steuereinrichtung bzw. zur mechanischen Integration in die Steuereinrichtung.

Weiterhin kann das Applikationsmodul in die Steuereinrichtung integriert sein und dort beispielsweise eine gesonderte Baugruppe oder Software-Applikation bilden.

Weiterhin kann ein Applikationsmodul als ein Software-Modul ausgebildet und eingerichtet sein. In diesem Fall kann beispielsweise eine Steuereinrichtung dieses Software-Modul umfassen und die Steuereinrichtung weiterhin zur Ausführung dieses als Software-Modul ausgestalteten Applikationsmoduls ausgebildet und eingerichtet sein.

In einer vorteilhaften Ausgestaltung ist ein Applikationsmodul Teil der Steuereinrichtung. Dabei kann das Applikationsmodul beispielsweise logisch der Steuereinrichtung zugehörig sein. Weiterhin kann das Applikationsmodul mechanisch mit der Steuereinrichtung gekoppelt sein bzw. mechanisch in die Steuereinrichtung integriert sein. Das Applikationsmodul kann auch als eine Software-Applikation ausgebildet und eingerichtet sein, wobei die Steuereinrichtung dann das als Softwareapplikation ausgestaltetes Applikationsmodul umfassen kann.

Ein Applikationsmodul kann als ein frei programmierbares Applikationsmodul ausgebildet und eingerichtet sein. Eine frei programmierbare Firmware ermöglicht es, eine frei programmierbare bzw. unabhängig programmierbare "Anwendung" oder "App" bereitzustellen, die als Teil der Firmware ausgeführt wird und/oder im Rahmen einer vom Applikationsmodul bereitgestellten Ablaufumgebung ausgeführt wird.

Ein frei programmierbares Applikationsmodul kann beispielsweise zur Ausführung von Software bzw. Programmen ausgebildet und eingerichtet sein, welche in einer Programmiersprache erstellt und ausgeführt werden, welche nicht von der übrigen bzw. restlichen Komponenten und/oder Modulen der Steuereinrichtung unterstützt wird. Insbesondere kann ein frei programmierbares Applikationsmodul beispielsweise zur Ausführung von Software bzw. Programmen ausgebildet und eingerichtet sein, welche in einer Programmiersprache erstellt und/oder ausgeführt werden, welche nicht durch den IEC-Standard IEC 61138 oder vergleichbare Standards bezüglich Steuerungseinrichtungen und/oder speicherprogrammierbaren Steuerungen als Programmiersprachen für derartige Einrichtungen festgelegt sind.

In einer vorteilhaften Ausgestaltung ist ein frei programmierbares Applikationsmodul nicht zum Ablauf von Programmen ausgebildet und eingerichtet, die in einer Programmiersprache gemäß IEC 61131, IEC 61499 oder einem vergleichbaren Standard erstellt wurden bzw. sind. Solche IEC61131- oder IEC61499-Programmiersprachen sind die Programmiersprachen: AWL (Anweisungsliste / engl. Instruction List (IL)), KOP (Kontaktplan / engl. Ladder Diagram (LD)), FBS oder FUP (Funktionsbaustein-Spache / engl. Function Block Diagram (FBD)), AS (Ablaufsprache / engl. Sequential Function Chart (SFC)) und ST (Struktuierter Text / engl. Structured Text (ST)).

Ein frei programmierbares Applikationsmodul für eine Steuereinrichtung kann beispielsweise derart ausgebildet und eingerichtet sein, dass es zum Ablauf einer Software-Applikation zusätzlich zu einem in der Steuer Einrichtung ablaufenden Steuerprogramms zur Steuerung der Maschine oder Anlage ausgebildet und eingerichtet ist. Ein derartiges frei programmierbares Applikationsmodul ermöglicht die Realisierung einer Funktionalität der Steuereinrichtung zusätzlich zu einer Standard-Steuerungsfunktionalität, die beispielsweise durch ein zentrales Steuerungsmodul für die Steuereinrichtung realisiert wird. Das zentrale Steuerungsmodul kann beispielsweise zum Ablauf des Steuerprogramms zur Steuerung der Maschine oder Anlage ausgebildet und eingerichtet sein. das zentrale Steuerungsmodul kann beispielsweise auch gemäß dem Standard IEC 61131, IEC 61499 und/oder vergleichbaren Standards für speicherprogrammierbare Steuereinrichtungen ausgebildet und eingerichtet sein oder zumindest eine derartige Funktionalität umfassen.

Beispiele für derartige Applikationsmodule können beispielsweise Hard- oder Software-Module zur Ausführung von Machine-Learning Applikationen sein. Weitere Beispiele für solche Applikationsmodule sind beispielsweise Hard- oder Software-Module zur Realisierung von Boole'schen Prozessoren, zur Realisierung bzw. Durchführung von Simulationen bzw. dem Ablauf von Simulationsprogrammen, zur Analyse von Bildern (z.B. Kamerabildern) oder Videos, z.B. unter anderem zum Erkennen von Gegenständen und/oder 2-D oder 3D-Formen, zur Programmierung bzw. Ausführung von mathematischen Algorithmen, analytischen Verfahren oder Big-Data Analysen, zum Ablauf eigenständiger Programme in einer oder mehrerer vorgegebenen Programmiersprachen (z.B. C, C++, Python, ...) oder vergleichbare Anwendungen oder Applikationen.

Als Edge-Device oder Edge-Gerät wird im Zusammenhang mit der vorliegenden Beschreibung eine Kommunikationseinrichtung, Computereinrichtung und/oder Steuereinrichtung verstanden, welche kommunikativ mit einem Automatisierungssystem (z.B. einer Steuereinrichtung, einem Steuerungssystem und/oder einem Bearbeitungssystem gemäß der vorliegenden Beschreibung) verbunden oder verbindbar ist - oder in dieses integriert. Weiterhin ist ein Edge-Device zumindest zur zusätzlichen Verbindung mit einem weiteren, nicht zum Automatisierungssystem gehörenden Kommunikationsnetz ausgebildet und eingerichtet. Weiterhin kann das Edge-Device auch einem weiteren, nicht zum Automatisierungssystem gehörenden Kommunikationsnetz verbunden oder verbindbar sein. Solch ein weiteres, nicht zum Automatisierungssystem gehörendes Kommunikationsnetz kann z.B. eine Cloud, ein Firmen-Kommunikationssystem oder -netz (z.B. einem Firmen-Intranet) oder ein öffentliches Kommunikationsnetz (z.B. ein Internet, ein WLAN, ein Ethernet, ein Mobilfunknetz, ein Festnetz (z.B. ein DSL-Netz) oder ähnliches) sein. Das Edge-Device oder Edge-Gerät kann dabei z.B. auch Teil des Automatisierungssystems sein und z.B. als eine Art Gateway eine Verbindung zu Kommunikationssystemen außerhalb des Automatisierungssystems herstellen bzw. die Möglichkeit haben, eine solche Verbindung herzustellen.

Ein Edge-Device oder Edge-Gerät kann beispielsweise eine Applikation zur Steuerung von Vorrichtungen oder Anlagen umfassen. Beispielsweise kann eine solche Applikation als eine Applikation mit der Funktionalität einer speicherprogrammierbaren Steuerung ausgebildet und eingerichtet sein. Das Edge-Device kann dabei beispielsweise mit einer weiteren Steuereinrichtung einer Vorrichtung oder Anlage verbunden sein oder auch unmittelbar mit einer zu steuernden Vorrichtung oder Anlage. Weiterhin kann das Edge-Device derart ausgebildet und eingerichtet sein, dass es zusätzlich noch mit einem Datennetzwerk oder einer Cloud verbunden ist bzw. zur Verbindung mit einem entsprechenden Datennetzwerk oder einer entsprechenden Cloud ausgebildet und eingerichtet ist.

Ein Edge-Device kann weiterhin zur Realisierung zusätzlicher Funktionalitäten im Zusammenhang mit beispielsweise der Steuerung einer Maschine, Anlage oder Komponente - oder Teilen davon - ausgebildet und eingerichtet sein. Solche Funktionalitäten können beispielsweise sein:
- Daten sammeln und Übertragen in die Cloud und/oder eine entsprechende Vorverarbeitung, Kompression und/oder Analyse solcher Daten zur Übertragung in die Cloud oder von der Cloud;
- eine Analyse von Daten z.B. mit AI-Verfahren, z.B. mit neuronalen Netzen oder entsprechenden ML-Modellen. Das Edge-Device kann dafür z.B. ein ML-Modell.
- Management oder Durchführung eines Trainings eines neuronalen Netzes oder ML-Modells. Das Training selbst kann dabei zumindest teilweise im Edge-Device selbst, oder aber zumindest u.a. auch in einer Cloud erfolgen. Erfolgt ein Training in einer Cloud, kann das Edge-Device z.B. dazu ausgebildet sein, das trainierte neuronale Netz oder ML-Modell herunterzuladen und nachfolgend zu verwenden.

Die mindestens eine Zeitinformation beispielsweise kann derart ausgebildet und eingerichtet sein, dass aus der mindestens einen Zeitinformation Transportzeiten eines beliebigen auf der Transporteinrichtung transportierten Produkts von der ersten zur zweiten Sensorkomponente und weiter zur Bearbeitungskomponente ermittelbar sind oder ermittelt werden.

Dabei kann die mindestens eine Zeitinformation beispielsweise Zeitdaten bezüglich einer Erfassung oder Erkennung eines bestimmten Produkts durch die erste Sensorkomponente, die zweite Sensorkomponente sowie die Bearbeitungskomponente umfassen oder aus derartigen Zeitdaten bestehen.

Weiterhin kann die mindestens eine Zeitinformation beispielsweise eine Transportzeit eines beliebigen Gegenstands von der ersten zur zweiten Sensorkomponente, sowie eine Transportzeit dieses Gegenstands von der zweiten Sensorkomponente zur Bearbeitungskomponente umfassen oder aus diesen Transportzeiten bestehen. Als weiteres Beispiel kann die mindestens eine Zeitinformation beispielsweise eine Transportzeit eines beliebigen Gegenstands von der ersten Sensorkomponente zur zweiten Sensorkomponente sowie eine Transportzeit dieses Gegenstands von der ersten Sensorkomponente zur Bearbeitungskomponente umfassen oder aus diesen Transportzeiten bestehen.

Weiterhin kann beispielsweise vorgesehen sein, dass die mindestens eine Zeitinformation und/oder die Transportzeiten eines auf der Transporteinrichtung transportierten Produkts von der ersten zur zweiten Sensorkomponente und weiter zur Bearbeitungskomponente - oder davon abgeleitete Größen - einem jeweils durch die erste und zweite Sensorkomponente erkannten Produkt zugeordnet sind. Diese Zuordnung kann beispielsweise im Rahmen einer Speicherung der mindestens einen Zeitinformation zusammen mit einer ID-Information und/oder Bezeichnung für ein entsprechendes erkanntes Produkt erfolgen oder auch durch vergleichbare geeignete Zuordnungsarten. Auf diese Weise kann dann durch die bekannten Transportzeiten von der ersten zur zweiten Sensorkomponente und von der zweiten Sensorkomponente zur Bearbeitungskomponente eine auf den ersten und zweiten Sensordaten dieses Produkts bezogene Bearbeitung oder Verarbeitung durch die Bearbeitungskomponente erfolgen.

Es kann auch vorgesehen sein, dass die mindestens eine Zeitinformation und/oder die Transportzeiten eines auf der Transporteinrichtung transportierten Produkts von der ersten zur zweiten Sensorkomponente und weiter zur Bearbeitungskomponente - oder davon abgeleitete Größen - einem jeweils durch die erste und zweite Sensorkomponente sowie die Bearbeitungskomponente erkannten Produkts zugeordnet sind. Auch diese Zuordnung kann beispielsweise im Rahmen einer entsprechenden Speicherung der Zeitinformationen zusammen mit einer ID-Information für das entsprechende erkannte Produkt erfolgen. Dies kann beispielsweise im Rahmen einer Kalibrierung eines entsprechenden Bearbeitungssystems, zum Beispiel durch die Edge-Recheneinrichtung, vorgesehen sein oder erfolgen.

Die Echtzeitsteuerung der Bearbeitungskomponente, und/oder einer gegebenenfalls vorhandenen mindestens einen weiteren Bearbeitungskomponente, erfolgt unter mittelbarer oder unmittelbarer Nutzung der ersten und zweiten Sensordaten sowie gegebenenfalls unter Nutzung von dritten und gegebenenfalls weiteren Sensordaten. Weiterhin erfolgt die Echtzeitsteuerung der Bearbeitungskomponente unter mittelbarer und/oder unmittelbarer Nutzung der Zeitinformation gemäß der vorliegenden Beschreibung.

Dabei wird unter einer mittelbaren Nutzung der ersten und/oder zweiten Sensordaten beispielsweise verstanden, dass anhand von ermittelten Sensordaten eine weitere Information, beispielsweise bezüglich eines Materials, einer Form oder einer sonstigen Eigenschaft eines Verarbeitungsprodukts ermittelt wird, und dann die Echtzeitsteuerung der Bearbeitungskomponente unter Verwendung dieser ermittelten Information erfolgt. Vergleichbares gilt für die mittelbare Verwendung der Zeitinformation.

In einer vorteilhaften Ausgestaltung ist das mindestens eine Applikationsmodul zur Ermittlung einer ersten Produktinformation unter Verwendung der ersten Sensordaten und einer zweiten Produktinformation unter Verwendung der zweiten Sensordaten ausgebildet und eingerichtet,
wobei das Steuerungsmodul zum Ablauf eines Steuerprogramms zur Echtzeitsteuerung der Bearbeitungskomponente zur Bearbeitung des Verarbeitungsprodukts unter Berücksichtigung der ersten und zweiten Produktinformation bezüglich des Verarbeitungsprodukts sowie der Zeitinformation und/oder der ermittelten Transportzeiten ausgebildet und eingerichtet ist.

Ganz allgemein können Produktinformationen alle Informationen sein die charakteristisch für ein Verarbeitungs-Produkt sind und/oder Eigenschaften eines Verarbeitung-Produkts darstellen. Weiterhin können Produktinformationen beispielsweise auch derart ausgebildet und eingerichtet sein, dass sie eine Erkennung oder Charakterisierung eines Verarbeitungsprodukts oder von Produkteigenschaften eines Verarbeitungsprodukts ermöglichen und/oder dazu beitragen.

Produktinformationen können dabei jegliche Informationen sein, die mindestens eine geometrische, physikalische, chemische oder sonstige Eigenschaft eines Verarbeitungsprodukts darstellen. So können geometrische Eigenschaften beispielsweise ein 2D-Umriss, eine äußere Form, eine 2D-Projektion, eine 3D-Form, eine äußere Form oder vergleichbare Informationen bezüglich einer äußeren Form eines Verarbeitungsprodukts sein.

Beispielsweise kann eine Produktinformation auch ein oder mehrere Materialien sein oder umfassen, aus welchen ein Produkt besteht oder zumindest teilweise oder vorwiegend besteht.

Physikalische und/oder chemische Eigenschaften können beispielsweise Materialeigenschaften wie eine elektrische Leitfähigkeit, eine Wärmeleitfähigkeit, magnetische Eigenschaften, Wärmekapazitäten, optische Eigenschaften (beispielsweise ein Brechungsindex, eine Transparenz, Reflexionseigenschaften, Absorptionseigenschaften, eine Eindringtiefe o. ä.) o. ä. sein.

Weiterhin können charakteristische Eigenschaften beispielsweise Oberflächen-Eigenschaften wie beispielsweise eine Farbe, eine Rauigkeit, eine Reflektivität o. ä. sein.

Eine Produktinformation kann auch eine Kennungs-Information oder ID-Information umfassen oder aus ihr bestehen, wie beispielsweise alphanumerische Zeichen, ein Barcode, ein QR-Code, ein RFID-Tag o. ä., die beispielsweise zur Charakterisierung, Benennung oder Typisierung eines Werkstücks oder Produkts und/oder auch zur eindeutigen Identifizierung eines Produkts ausgebildet und eingerichtet sein können. Dabei kann die ID-Information beispielsweise derart ausgebildet und eingerichtet sein, dass sie von verschiedenen Sensortypen erfassbar oder erkennbar ist oder erfasst oder erkannt wird.

Im Sinne der vorliegenden Beschreibung kann die Ermittlung derartiger Produktinformationen beispielsweise eine mittelbare Benutzung der Sensordaten darstellen. In diesem Sinne erfolgt die Echtzeitsteuerung der Bearbeitungskomponente dann unter Verwendung der ersten und zweiten Produktinformationen bezüglich des Verarbeitungsprodukts sowie der Zeitinformation und/oder der ermittelten Transportzeiten.

So können beispielsweise unter Verwendung der ersten und zweiten Sensordaten Materialien, Materialeigenschaften und/oder sonstige Eigenschaften eines Verarbeitungsprodukts ermittelt werden und durch die Bearbeitungskomponente eine an diese ermittelten Eigenschaften angepasste Bearbeitung des Verarbeitungsprodukts erfolgen. Die Zuordnung der ersten und zweiten Produktinformationen zum selben Verarbeitungsprodukt, sowie die spezifische Steuerung der Bearbeitungskomponente bezüglich dieses Verarbeitungsprodukts, erfolgt dann unter Verwendung der Zeitinformation und/oder der ermittelten Transportzeiten zwischen den Sensoreinrichtungen und der Bearbeitungskomponente.

Weiterhin kann das mindestens eine Applikationsmodul ein erstes ML-Modell zur Ermittlung der ersten Produktinformation und/oder ein zweites ML-Modell zur Ermittlung der zweiten Produktinformation umfasst.

Dabei kann beispielsweise vorgesehen sein, dass das erste und/oder zweite ML-Modell derart im mindestens einen Applikationsmodul implementiert ist, dass es zumindest im Rahmen der Ermittlung der ersten und/oder zweiten Produktinformation verwendet wird oder verwendet werden kann.

Einsatzmöglichkeiten für die Verwendung eines solchen ML-Modells zur Ermittlung von Produktinformationen können beispielsweise die Auswertung von erfassten ein oder mehreren Bildern eines Verarbeitungsprodukts sein. Eine solche Auswertung von erfassten ein oder mehreren Bildern kann beispielsweise zur Ermittlung eines Produkts, eines Produkt-Typs, eines Produktmaterials, einer Produkt-Oberflächeneigenschaft, eines Produkt-Aussehens, einer Produktform, einer Produktart, einer Produkt-Lage oder auch beispielsweise von Greifpunkten zum Greifen eines Verarbeitungsprodukts oder zur Ermittlung von ähnlichen Informationen bezüglich eines erfassten Produkts ausgebildet und eingerichtet sein. Weiterhin können vermittels eines ML-Modells aus erfassten Sensordaten beispielsweise auch ein Produktmaterial bzw. Produkt-Materialien oder vergleichbare physikalisch-chemische o. ä. Eigenschaften ermittelt werden.

Unter einem ML-Modell oder "Machine-Learning"-Modell wird, insbesondere im Rahmen der vorliegenden Beschreibung, das Ergebnis einer Anwendung eines maschinellen Lernalgorithmus oder Lernverfahrens auf bestimmte Daten verstanden. Ein ML-Modell stellt dabei das digital gespeicherte oder speicherbare Ergebnis der Anwendung des maschinellen Lernalgorithmus oder Lernverfahrens auf die analysierten Daten dar.

Daten zum Erstellen und/oder Trainieren eines ML-Modells gemäß der vorliegenden Erfindung können beispielsweise historische Daten der ersten und/oder zweiten Sensorkomponente sein oder solche Daten umfassen. Weiterhin können Daten zum Erstellen und/oder Trainieren des ML-Modells historische Daten von zur ersten und/oder zweiten Sensorkomponente baugleichen, ähnlichen oder vergleichbaren Sensorkomponenten umfassen, oder auch historische Daten von Sensoren der gleichen Kategorie oder des gleichen Typs wie die erste und/oder zweite Sensorkomponente.

Bei einer Verwendung eines ML-Modells bzw. des ML-Modells mit Sensordaten weiterer Sensoren, oder auch der Verwendung weiterer ML-Modelle mit Sensordaten weiterer Sensoren, kann ein Erstellen und/oder ein Trainieren eines solchen ML-Modells ebenfalls mit historischen Daten dieser Sensoren, vergleichbare Sensoren oder Sensoren eines ähnlichen oder vergleichbaren Sensortyps erfolgen.

Dabei wird unter einem maschinellen Lernverfahren beispielsweise ein automatisiertes ("maschinelles") Verfahren verstanden, welches Ergebnisse nicht durch im Vorhinein festgelegte Regeln generiert, sondern bei welchem vermittels eines maschinellen Lernalgorithmus oder Lernverfahrens aus vielen Beispielen (automatisch) Regelmäßigkeiten identifiziert werden, auf deren Basis dann Aussagen über zu analysierende Daten erzeugt werden.

Solche maschinellen Lernverfahren können beispielsweise als ein überwachtes Lernverfahren, ein teilüberwachtes Lernverfahren, ein unüberwachtes Lernverfahren oder auch ein bestärkendes Lernverfahren ("Reinforcement Learning") ausgebildet und eingerichtet sein.

Beispiele für maschinelle Lernverfahren sind z.B. Regressions-Algorithmen (z.B. lineare Regressionsalgorithmen), eine Erzeugung oder Optimierung von Entscheidungsbäumen (sogenannte "Decision Trees"), Lernverfahren oder Trainingsverfahren für neuronale Netze, Clustering-Verfahren (z.B. ein sogenanntes "k-means-Clustering"), Lernverfahren für oder Erzeugung von Stützvektormaschinen ("Support Vector Machines" (SVM)), Lernverfahren für oder Erzeugung von sequentiellen Entscheidungsmodellen oder Lernverfahren für oder Erzeugung von Bayessche Modellen oder Netzen.

So ist ein Beispiel für ein maschinelles Lernverfahren die "Lineare Regression". Die lineare Regression ist eine Parametrische Methode, bei der die Labels durch die Gewichtung aller Features angenähert werden. Bei einer Standardvariante des linearen Modells wird bei der Optimierung der mittlere quadratische Fehler (engl. Mean Squared Error, MSE) minimiert. Es gibt andere Varianten des linearen Modells, die sich nach der Form der Fehlerfunktion unterscheiden. Eine Variante ist z.B. der Huber-Schätzer, bei dem z.B. ein Parameter *ε* eingeführt wird, um Ausreißer in den Inputs zu beseitigen.

Ein weiteres Beispiel für ein maschinelles Lernverfahren ist das k-Nächste-Nachbarn-Verfahren. Das Prinzip des k-Nächste-Nachbar (k-NN) Modells ist, für jeden Input die k nächsten Inputs zu ermitteln. Es ist eine nicht-parametrische Methode, bei der das Ähnlichkeitskriterium eine definierte Metrik ist. Diese Metrik kann eine Norm oder eine Distanz sein, die für alle Inputs bestimmbar ist. Aus der Nachbarschaft bzw. Ähnlichkeit der Inputs wird die Nachbarschaft der Labels hergeleitet.

Entscheidungsbäume sind ein weiteres Beispiel für ein ML-Modell, dem ein maschinelles Lernverfahren zugrunde liegt. Ein Entscheidungsbaum (engl. Decision Tree, DT) ist eine hierarchische Struktur, mit der eine nicht-parametrische Schätzung implementiert werden kann. Bei der Datenverarbeitung mit Entscheidungsbäumen werden die Inputs in lokalen Regionen aufgeteilt, deren Distanz zueinander durch eine bestimmte Metrik definiert wird. Diese lokalen Regionen sind die Entscheidungsbäume.

Ein Entscheidungsbaum ist eine Sequenz von rekursiven Aufteilungen, die aus Entscheidungsknoten und Endknoten bzw. Blättern besteht. Bei jedem Entscheidungsknoten wird über eine definierte Funktion, die sogenannte Diskriminanzfunktion, eine diskrete Entscheidung getroffen, deren Ergebnis (ja oder nein) zu den folgenden Knoten führt. Wird ein Blattknoten erreicht, dann endet der Prozess und ein Ausgabewert wird geliefert.

Das Ergebnis einer solchen Anwendung eines solchen maschinellen Lernalgorithmus oder Lernverfahrens auf bestimmte Daten wird, insbesondere in der vorliegenden Beschreibung, als "Machine-Learning"-Modell oder ML-Modell bezeichnet. Ein solche ML-Modell stellt dabei das digital gespeicherte oder speicherbare Ergebnis der Anwendung des maschinellen Lernalgorithmus oder Lernverfahrens auf die analysierten Daten dar.

Dabei kann die Erzeugung des ML-Modells derart ausgebildet und eingerichtet sein, dass das ML-Modell durch die Anwendung des maschinellen Lernverfahrens neu gebildet wird oder ein bereits bestehendes ML-Modell durch die Anwendung des maschinellen Lernverfahrens verändert oder angepasst wird.

Beispiele für solche ML-Modelle sind Ergebnisse von Regressions-Alogrithmen (z.B. eines linearen Regressions-Algorithmus), Neuronale Netze, insbesondere trainierte Neuronale Netze ("Neural Networks"), Entscheidungsbäume ("Decision Tree"), die Ergebnisse von Clustering-Verfahren (inklusive z.B. die erhaltenen Cluster oder Cluster-Kategorien, -Definitionen und/oder -Parameter), Stützvektormaschinen ("Support Vector Machines" (SVM)), Sequentielle Entscheidungsmodelle oder Bayessche Modelle oder Netze.

Weiterhin können auch verschiedene Kategorien von ML-Modellen zu einem Gesamt-ML-Modell kombiniert werden. Eine solche Modelkombination (engl. Ensemble Learning) ist die Verknüpfung von verschiedenen ML-Modellen, um eine bessere Inferenz zu erreichen. Die kombinierten ML-Modelle bilden ein sogenanntes Ensemble. Es gibt verschiedene Methoden, wie Modelle zusammengeführt werden können. Beispielsweise können sie per Voting, Bagging oder Boosting kombiniert werden.

Zudem gibt es auch noch das sogenannte Automatisierte Maschinelle Lernen. Das automatisierte maschinelle Lernen (AutoML) ist ein Verfahren, nach dem für gegebene Aufgaben oder Datensätze ein Algorithmus versucht, die beste Lernstrategie aus einer bestimmten Anzahl von maschinellen Lernverfahren bzw. ML-Modellen zu bestimmen. Beim AutoML sucht der Algorithmus nach den besten Vorverarbeitungsschritten und den besten maschinellen Lernverfahren bzw. dem besten Ensemble.

AutoML kann mit Meta-Learning kombiniert werden. Meta-Learning, auch "Learning to Learn" genannt, ist die Wissenschaft, bei der systematisch beobachtet wird, wie verschiedene Ansätze von ML bei einer Vielzahl von Lernaufgaben abschneiden, und dann aus diesen Erfahrungen (Metadaten) gelernt wird, um neue Aufgaben viel schneller zu lernen, als es sonst möglich wäre.

Eine gute Implementierung vom AutoML bietet die Software-Bibliothek AUTO-SKLEARN (https://www.automl.org/automl/auto-sklearn/). Dieses System kann ein Ensemble von bis 15 Schätzer bilden. Außerdem können dazu noch bis zu 14 Vorverarbeitungsmethoden für Features und vier Vorverarbeitungsmethoden für Datensätze genutzt werden.

Neuronale Netze können dabei z.B. sogenannte "Deep Neural Networks", "Feed Forward Neural Networks", "Recurrent Neural Networks"; "Convolutional Neural Networks" oder "Autoencoder-Neural-Networks" sein. Dabei wird die Anwendung entsprechender maschineller Lernverfahren auf neuronale Netze häufig auch als "Training" des entsprechenden Neuronalen Netzes bezeichnet.

Entscheidungsbäume können beispielsweise als sogenannte "iterative Dichotomizer 3" (ID3), Klassifikations- oder Regressionsbäume (CART) oder auch sogenannte "Random Forests" ausgebildet und eingerichtet sein.

Unter einem neuronalen Netz wird, zumindest im Zusammenhang mit der vorliegenden Beschreibung, z.B. eine elektronische Einrichtung verstanden, welche ein Netzwerk sogenannter Knoten umfasst, wobei in der Regel jeder Knoten mit mehreren anderen Knoten verbunden ist. Weiterhin wird unter einem neuronalen Netz im Zusammenhang mit der vorliegenden Beschreibung beispielsweise weiterhin ein in einer Speichereinrichtung gespeichertes Computer-Programm Produkt verstanden, welches beim Ablauf auf einem Computer ein solches Netzwerk gemäß der vorliegenden Beschreibung erzeugt. Die Knoten werden beispielsweise auch als Neuronen, Units oder Einheiten bezeichnet. Dabei hat jeder Knoten mindestens eine Eingangs- und eine Ausgangsverbindung. Als Eingangs-Knoten für ein neuronales Netz, werden solche Knoten verstanden, welche von der Außenwelt Signale (Daten, Reize, Muster oder ähnliches) empfangen können. Unter Ausgabe-Knoten eines neuronalen Netzes werden solche Knoten verstanden, welche Signale, Daten oder ähnliches an die Außenwelt weitergeben können. Unter sogenannten "versteckten Knoten" ("hidden nodes") werden solche Knoten eines neuronalen Netzes verstanden, welche weder als Eingangs- noch als Ausgangs-Knoten ausgebildet sind.

Dabei kann das neuronale Netz beispielsweise als ein sogenanntes tiefes neuronales Netz ("deep neural network" (DNN)) ausgebildet sein. Ein solches "deep neural network" ist ein neuronales Netz, in welchem die Netzknoten in Schichten angeordnet sind (wobei die Schichten selbst ein-, zwei- oder auch höher-dimensional sein können). Ein tiefes neuronales Netz umfasst dabei mindestens eine oder zwei sogenannte verdeckte Schichten, welche nur Knoten umfassen, die nicht Eingangsknoten oder Ausgangsknoten sind. Das heißt, die verdeckten Schichten haben keine Verbindungen zu Eingangssignalen oder Ausgangssignalen.

Unter dem sogenannten "Deep Learning" wird dabei beispielsweise eine Klasse von maschinellen Lerntechniken verstanden, welche viele Schichten der nichtlinearen Informationsverarbeitung für die überwachte oder nicht-überwachte Merkmalsextraktion und -transformation sowie zur Musteranalyse und - klassifizierung ausnutzt.

Ein Neuronales Netz kann beispielsweise auch eine so genannte Auto-Encoder-Struktur aufweisen. Eine derartige Auto-Encoder-Struktur kann beispielsweise geeignet sein, um eine Dimensionalität der Daten zu reduzieren und beispielsweise so Ähnlichkeiten und Gemeinsamkeiten zu erkennen.

Ein Neuronales Netz kann beispielsweise auch als ein so genanntes Klassifizierungs-Netz ausgebildet sein, welches besonders dazu geeignet ist, Daten in Kategorien einzuteilen. Derartige Klassifizierungs-Netze werden beispielsweise in Zusammenhang mit Handschrift-Erkennung eingesetzt.

Eine weitere mögliche Struktur eines neuronalen Netzes kann beispielsweise die Ausgestaltung als so genanntes "Deep-Believe-Network" sein.

Ein neuronales Netz kann beispielsweise auch eine Kombination von mehreren der vorstehend genannten Strukturen aufweisen. So kann beispielsweise die Architektur des neuronalen Netzes eine Auto-Encoder-Struktur umfassen, um die Dimensionalität der Eingangsdaten zu reduzieren, welche dann weiterhin mit einer anderen Netzstruktur kombiniert werden kann, um beispielsweise Besonderheiten und/oder Anomalien innerhalb der datenreduzierten Dimensionalität zu erkennen bzw. die datenreduzierte Dimensionalität zu klassifizieren.

Die die einzelnen Knoten und deren Verbindungen beschreibenden Werte inklusive weiterer, ein bestimmtes neuronale Netz beschreibende Werte, können beispielsweise in einem das neuronale Netz beschreibenden Wertesatz gespeichert werden. Ein solcher Wertesatz stellt dann beispielsweise eine Ausgestaltung des neuronalen Netzes dar. Wird ein solcher Wertesatz nach einem Training des neuronalen Netzes gespeichert, so wird damit beispielsweise eine Ausgestaltung eines trainierten neuronalen Netzes gespeichert. So ist es beispielsweise möglich, in einem ersten Computersystem das neuronale Netz mit entsprechenden Trainingsdaten zu trainieren, den entsprechenden Wertesatz, welcher diesem neuronalen Netz zugeordnet ist, dann zu speichern und als Ausgestaltung des trainierten neuronalen Netzes in ein zweites System zu transferieren.

Auch das z.B. in einer elektronischen oder sonstigen Speichereinrichtung oder einem Computer oder einer Rechen- oder Steuereinrichtung gespeicherte Computerprogramm oder Computerprogrammprodukt, welches zum Trainieren und/oder der Inferenz des Neuronalen Netzes verwendet wurde, wird und/oder werden kann, mitsamt dem entsprechenden Wertesatz für dieses Neuronale Netz, kann eine Ausgestaltung des trainierten Neuronalen Netzes darstellen. Weiterhin kann auch ein aus einem derartigen Computerprogramm bzw. Computerprogrammprodukt durch einen weiteren Kompilierungs-, Optimierungs- oder Verarbeitungsschritt gewonnenes weiteres Computerprogramm bzw. ein weiteres Computerprogrammprodukt eine Ausgestaltung des trainierten Neuronalen Netzes darstellen.

Ein neuronales Netz kann in der Regel trainiert werden, indem über verschiedenste bekannte Lernmethoden durch Eingabe von Eingangsdaten in das neuronale Netz und Analyse der dann entsprechenden Ausgangsdaten aus dem neuronalen Netz Parameterwerte für die einzelnen Knoten oder für deren Verbindungen ermittelt werden. Auf diese Weise kann ein neuronales Netz mit bekannten Daten, Mustern, Reizen oder Signalen auf an sich heute bekannte Weise trainiert werden, um das so trainierte Netz dann nachfolgend beispielsweise zur Analyse weiterer Daten verwenden zu können.

Allgemein wird unter dem Training des neuronalen Netzes verstanden, dass die Daten, mit welchen das neuronale Netz trainiert wird, im neuronalen Netz mithilfe eines oder mehrerer Trainings-Algorithmen verarbeitet werden, um so genannte Vorspannungswerte ("Bias"), Gewichtungswerte ("weights") und/oder Transferfunktionen ("Transfer Functions") der einzelnen Knoten des neuronalen Netzes bzw. der Verbindungen zwischen jeweils zwei Knoten innerhalb des neuronalen Netzes zu berechnen bzw. zu verändern.

Zum Training eines neuronalen Netzes, z.B. gemäß der vorliegenden Beschreibung, kann beispielsweise eine der Methoden des so genannten "überwachten Lernens" ("supervised learning") verwendet werden. Hierbei werden einem Netz durch Training mit entsprechenden Trainingsdaten diesen Daten jeweils zugeordnete Ergebnisse oder Fähigkeiten antrainiert. Weiterhin kann zum Training des neuronalen Netzes auch eine Methode des so genannten unüberwachten Trainings ("unsupervised learning") verwendet werden. Ein solcher Algorithmus erzeugt für eine gegebene Menge von Eingaben beispielsweise ein Modell, welches die Eingaben beschreibt und daraus Vorhersagen ermöglicht. Dabei gibt es beispielsweise Clustering-Verfahren, mit welchen sich die Daten in verschiedene Kategorien einteilen lassen, wenn sie sich beispielsweise durch charakteristische Muster voneinander unterscheiden.

Beim Trainieren eines neuronalen Netzes können auch überwachte und unüberwachte Lernmethoden kombiniert werden, beispielsweise wenn Teilen der Daten antrainierbare Eigenschaften oder Fähigkeiten zugeordnet sind, während dies bei einem anderen Teil der Daten nicht der Fall ist.

Weiterhin können auch noch Methoden des so genannten bestärkenden Lernens ("reinforcement learning") für das Training des neuronalen Netzes, zumindest unter anderem, verwendet werden.

Beispielsweise kann ein Training, welches eine relativ hohe Rechenleistung eines entsprechenden Computers erfordert, auf einem hochperformanten System geschehen, während weitere Arbeiten oder Datenanalysen mit dem trainierten neuronalen Netz dann durchaus auf einem niedriger-performanten System durchgeführt werden können. Solche weiteren Arbeiten und/oder Datenanalysen mit dem trainierten neuronalen Netz können zum Beispiel auf einem Assistenzsystem und/oder auf einer Steuereinrichtung, einer Speicherprogrammierbaren Steuerung, einem Edge-Device bzw. einer Edge-Recheneinrichtung oder einer modularen Speicherprogrammierbaren Steuerung oder weiteren entsprechenden Einrichtungen gemäß der vorliegenden Beschreibung erfolgen.

Maschinelles Lernen und/oder die Überwachung eines maschinellen Lernsystems arbeiten in zwei Hauptphasen: Training und Inferenz.

Inferenz ist der Prozess der Generierung eines Ergebnisses des ML-modells durch Eingabe neuer Daten in diese Modelle, um ein Ergebnis zu erzeugen, während die neuen Daten nicht für das Training und/oder die Einrichtung des ML-modells oder des Überwachungsartefakts verwendet wurden. Z.B. Machine Learning Inferenz ist die Fähigkeit eines maschinellen Lernsystems, Vorhersagen aus neuartigen Daten zu treffen. Es gibt drei Schlüsselkomponenten, die für maschinelles Lernen oder Überwachungsinferenz benötigt werden: eine Datenquelle, ein maschinelles Lern- oder Überwachungssystem zur Verarbeitung der Daten und ein Datenziel.

In der Trainingsphase füttert ein Entwickler sein Modell mit einem kuratierten Datensatz, damit er alles "lernen" kann, was er über die Art der zu analysierenden Daten benötigt. In der Inferenzphase kann das Modell dann Vorhersagen treffen.

Training bezieht sich auf den Prozess der Verwendung eines maschinellen Lernalgorithmus zum Erstellen eines Modells. Das Training beinhaltet die Verwendung eines Deep-Learning-Frameworks (z. B. TensorFlow) und eines Trainingsdatensatzes. IoT-Daten bieten eine Quelle für Trainingsdaten, die Datenwissenschaftler und Ingenieure verwenden können, um Machine Learning-Modelle für eine Vielzahl von Anwendungsfällen zu trainieren, von der Fehlererkennung bis hin zu sogenannten "Consumer Intelligence".

Inferenz bezieht sich auf den Prozess der Verwendung eines trainierten maschinellen Lernalgorithmus, um eine Vorhersage zu treffen. IoT-Daten können als Eingabe für ein trainiertes Machine Learning-Modell verwendet werden und ermöglichen Vorhersagen, die die Entscheidungslogik auf dem Gerät, am Edge-Gateway oder an anderer Stelle im IoT-System steuern können.

Ein aufwändig trainiertes neuronales Netzwerk ist häufig eine klobige, massive Datenbank. Es gibt zwei Hauptansätze, um dieses riesige neuronale Netzwerk zu nehmen und es für Geschwindigkeit und verbesserte Latenz in Anwendungen zu modifizieren, die z.B. über andere Netzwerke oder auf niedrig performanteren Geräten laufen.

Der erste Ansatz betrachtet Teile des neuronalen Netzwerks, die nach dem Training nicht aktiviert werden. Diese Abschnitte werden nicht benötigt und können "weggeschnitten" werden. Der zweite Ansatz sucht nach Möglichkeiten, mehrere Schichten des neuronalen Netzwerks zu einem einzigen Rechenschritt zu verschmelzen.

Es ist vergleichbar mit der Komprimierung, die mit einem digitalen Bild passiert. Designer arbeiten vielleicht an diesen riesigen, schönen, Millionen pixelbreiten und hohen Bildern, aber wenn sie sie online stellen, werden sie zu einem JPEG. Es wird fast genau das gleiche sein, nicht unterscheidbar für das menschliche Auge, aber mit einer kleineren Auflösung. Ähnlich verhält es sich mit der Inferenz, die fast die gleiche Genauigkeit der Vorhersage erhält, jedoch vereinfacht, komprimiert und für die Laufzeitleistung optimiert.

Weiterhin kann ein Steuerungssystem gemäß der vorliegenden Beschreibung derart ausgebildet und eingerichtet sein, dass die Transporteinrichtung mindestens eine Erkennungsinformation umfasst, wobei die mindestens ein Erkennungsinformation und/oder die erste und zweite Sensorkomponente sowie die Bearbeitungskomponente derart ausgebildet und eingerichtet sind, dass die mindestens eine Erkennungsinformation von der ersten und zweiten Sensorkomponente sowie der Bearbeitungskomponente erfassbar ist oder erfasst wird.

Die Bearbeitungskomponente kann auch eine oder mehrere Sensorkomponenten bzw. einen oder mehrere Sensoren umfassen, bzw. der Bearbeitungskomponente kann solch eine oder mehrere Sensorkomponenten bzw. solch ein oder mehrere Sensoren zugeordnet sein. Dabei kann eine solche Sensorkomponente bzw. ein solcher Sensor entsprechend einer Sensorkomponente bzw. einem Sensor gemäß der vorliegenden Beschreibung ausgebildet und eingerichtet sein. Solche Sensorkomponenten bzw. ein solcher Sensor kann beispielsweise dafür ausgebildet und eingerichtet sein ein Verarbeitungsprodukts so zu erkennen, dass es dann gemäß entsprechenden Vorgaben bearbeiten werden kann oder bearbeitet wird.

Dabei kann die erste und zweite Sensorkomponente sowie die Bearbeitungskomponente, die von der ersten und zweiten Sensorkomponente sowie der Bearbeitungskomponente gelieferten Sensordaten, die Auswertung dieser Sensordaten/oder die Erkennungsinformation derart ausgebildet und eingerichtet sein, dass die Erkennungsinformation von der ersten und zweiten Sensorkomponente sowie der Bearbeitungskomponente als Erkennungsinformation identifizierbar ist oder identifiziert wird.

Auf diese Weise ist es möglich anhand der von der ersten und zweiten Sensorkomponente sowie der Bearbeitungskomponente erfassten Daten bezüglich der Erkennungsinformation, die mindestens eine Zeitinformation und/oder Transportzeiten eines auf der Transporteinrichtung transportierten Produkts von der ersten zur zweiten Sensorkomponente und weiter zur Bearbeitungskomponente zu ermitteln. So kann beispielsweise jeweils gleichzeitig mit der Erfassung von Sensordaten mittels der Erkennungsinformation durch die erste und zweite Sensorkomponente sowie die Bearbeitungskomponente eine Zeitinformation erfasst werden, beispielsweise ein sogenannter Zeitstempel, aus welcher dann die vorstehend genannte mindestens eine Zeitinformation und/oder die genannten Transportzeiten ermittelbar sind oder ermittelt werden.

Dabei kann die Identifikation der Erkennungsinformation als Erkennungsinformation durch die erste und zweite Sensorkomponente sowie die Bearbeitungskomponente beispielsweise anhand einer Lage der Erkennungsinformation an der Transporteinrichtung, auf der Transporteinrichtung oder in Bezug auf die Transporteinrichtung erfolgen. Weiterhin kann die Identifikation der Erkennungsinformation als Erkennungsinformation durch die erste und zweite Sensorkomponente wie die Bearbeitungskomponente beispielsweise anhand einer speziellen Form, Materialeigenschaft, einer speziellen Oberflächeneigenschaft (z.B. Farbe) oder einer Kombination aus den vorstehend genannten Kriterien Lage, Form, Materialeigenschaft, sonstige Eigenschaft, und/oder Oberflächeneigenschaft erfolgen.

Dabei können von der ersten und zweiten Sensorkomponente sowie der Bearbeitungskomponente beispielsweise jeweils gleiche der genannten Kriterien oder Eigenschaften zur Identifikation Der Erkennungsinformation verwendet werden, oder auch jeweils verschiedene.

Beispielsweise kann eine Erkennungsinformation am Rand einer Transporteinrichtung, beispielsweise am Rand eines Transportbands oder am Rand eines Transport-Trägers, befestigt bzw. aufgedruckt oder vergleichsweise angebracht sein und aus einem bestimmten grafischen Symbol bestehen. Dabei kann das grafische Symbol beispielsweise als ein Erkennungs-Code (beispielsweise ein QR-Code oder Barcode oder ein spezielles Symbol) ausgebildet und eingerichtet sein.

Außerdem - oder auch zusätzlich - kann die Erkennungsinformation z.B. aus einem magnetischen Material mit beispielsweise speziellen magnetischen Eigenschaften bestehen - oder ein derartiges Material umfassen. Das magnetische Material kann beispielsweise Teil eines grafischen Symbols sein oder z.B. ein unabhängiger Teil der Erkennungsinformation. In einer Kombination mit einem grafischen Symbol kann das magnetische Material beispielsweise ein als Träger für das grafischen Symbol ausgebildetes Element ausgebildet und eingerichtet sein.

Bei einem beispielhaften System kann z.B. eine erste der Sensorkomponenten als eine Flächen- oder Linien-Kamera ausgebildet ist und die Bearbeitungskomponente eine solche Flächenoder Linienkamera umfassen. Weiterhin kann die zweite Sensorkomponente als ein Detektor zur Erfassung magnetische Eigenschaften ausgebildet und eingerichtet sein. Bei solch einem Beispiel-System kann eine Identifikation einer vorstehend erläuterten Erkennungsinformation wie nachfolgend dargestellt erfolgen. So kann beispielsweise durch die ortauflösenden Eigenschaften der Flächen- oder Linien-Kamera eine Identifikation der Erkennungsinformation am Rande der Transporteinrichtung erfolgen. Weiterhin kann dazuhin oder auch alternativ die Erkennungsinformation aufgrund der ortsauflösenden Eigenschaften der genannten Kameras anhand des Erkennungs-Codes identifiziert werden. Durch den Magnetsensor lässt sich beispielsweise eine spezielle magnetische Eigenschaft der Erkennungsinformation feststellen. Im Falle eines ortsauflösenden Magnetsensors kann auch hier die Identifikation der Erkennungsinformation durch die Erfassung der Lage am Rande der Transporteinrichtung erfolgen.

Die Erkennungsinformation kann beispielsweise an der Transporteinrichtung fixiert sein, dauerhaft mit der Transporteinrichtung verbunden sein, lösbar mit der Transporteinrichtung verbindbar sein oder verbunden sein, auf der Transporteinrichtung abgelegt sein oder auf sonstige Weise an die Transporteinrichtung gekoppelt sein bzw. von der Transporteinrichtung umfasst sein.

Die Erkennungsinformation kann beispielsweise auch unmittelbar auf der Transporteinrichtung angebracht sein, beispielsweise aufgedruckt, aufgeklebt oder vergleichbar verbunden.

Weiterhin kann die Erkennungsinformation auf einem mit der Transporteinrichtung dauerhaft verbundenen, lösbar mit der Transporteinrichtung verbundenen oder auch auf der Transporteinrichtung abgelegten Gegenstand verbunden sein oder Teil eines derartigen Gegenstands sein.

Beispielsweise kann die Erkennungsinformation als eine optisch erkennbare Information, beispielsweise ein Symbol, einen Barcode, ein QR-Code, eine Farbinformation und/oder eine vergleichbare Information ausgebildet und eingerichtet sein bzw. eine derartige Information umfassen. Weiterhin kann die Erkennungsinformation auch eine entsprechende Materialeigenschaft umfassen, wie beispielsweise eine bestimmte magnetische, elektrische oder sonstige Materialeigenschaft. Die Erkennungsinformation kann auch eine bestimmte Form, Oberflächeneigenschaft o. ä. umfassen oder aus einer solchen bestehen.

Dabei kann die Erkennungsinformation auf einem Gegenstand, einer Baugruppe, einer Vorrichtung oder einem vergleichbaren Gegenstand angebracht sein oder Teil dieses Gegenstands, der Baugruppe oder der Vorrichtung sein.

Dabei müssen die Erkennungsinformation, die erste und zweite Sensorkomponente, sowie die Bearbeitungskomponente und die Transporteinrichtung derart zueinander angeordnet sein, dass die Erkennungsinformation im normalen Betrieb der Transporteinrichtung von der ersten und zweiten Sensorkomponente sowie der Bearbeitungskomponente erfassbar ist oder erfasst wird.

Weiterhin muss die Erkennungsinformation, die erste und zweite Sensorkomponente, die Bearbeitungskomponente, sowie die Erkennungsinformation derart ausgebildet eingerichtet und angebracht sein, dass die von der ersten und zweiten Sensorkomponente sowie der Bearbeitungskomponente erfasste Information einander derart zuordenbar ist, dass die mindestens eine Zeitinformation bzw. die Transportzeiten eines auf der Transporteinrichtung transportierten Produkts von der ersten zur zweiten Sensorkomponente und weiter zur Bearbeitungskomponente ermittelt werden können oder ermittelt werden.

Die vorstehend genannte Aufgabe wird auch gelöst durch ein Bearbeitungssystem für ein Verarbeitungs-Produkt, umfassend:
- ein Steuerungssystem gemäß der vorliegenden Beschreibung,
- eine erste Sensorkomponente der vorliegenden Beschreibung zum Anschluss an das mindestens eine Applikationsmodul der Steuereinrichtung des Steuerungssystems zur Erfassung von ersten Sensordaten bezüglich des Verarbeitungs-Produkts,
- eine zweite Sensorkomponente gemäß der vorliegenden Beschreibung zum Anschluss an das mindestens eine Applikationsmodul der Steuereinrichtung des Steuerungssystems zur Erfassung von zweiten Sensordaten bezüglich des VerarbeitungsProdukts,
- eine Bearbeitungskomponente gemäß der vorliegenden Beschreibung zum Bearbeiten, Verarbeiten und/oder Manipulieren des Verarbeitungs-Produkts, sowie
- eine Transporteinrichtung gemäß der vorliegenden Beschreibung zum Transport des Verarbeitungsprodukts von der ersten zu der zweiten Sensorkomponente und weiterhin zu der Bearbeitungskomponente.

Dabei kann das Verarbeitung-Produkt, das Steuerungssystem, die erste Sensorkomponente, die Steuereinrichtung, das mindestens eine Applikationsmodul, die zweite Sensorkomponente, die Bearbeitungskomponente sowie die Transporteinrichtung gemäß der vorliegenden Beschreibung ausgebildet und eingerichtet sein.

Dadurch, dass das Steuerungssystem zur Ermittlung mindestens einer Zeitinformation ausgebildet und eingerichtet ist, aus welcher Transportzeiten eines auf der Transporteinrichtung transportierten Produkts von der ersten zur zweiten Sensorkomponente und weiter zur Bearbeitungskomponente ermittelbar sind, ist es möglich das Bearbeitungssystem flexibler und einfacher an die Bearbeitung des Verarbeitungsprodukts anzupassen. Insbesondere lassen sich auf diese Weise einfach und flexibel verschiedenste Verarbeitungsprodukte durch entsprechende Sensorik spezifisch auf das einzelne Verarbeitungsprodukts hin angepasst bearbeiten.

Das Bearbeitungssystem kann weiterhin derart ausgebildet und eingerichtet sein, dass die Transporteinrichtung mindestens eine Erkennungsinformation umfasst, wobei die mindestens ein Erkennungsinformation und/oder die erste und zweite Sensorkomponente sowie die Bearbeitungskomponente derart ausgebildet und eingerichtet sind, dass die mindestens eine Erkennungsinformation von der ersten und zweiten Sensorkomponente sowie der Bearbeitungskomponente erfassbar ist oder erfasst wird.

Dabei kann die Erkennungsinformation, die Einrichtung und Ausbildung der Erkennungsinformation, die Beziehung der Erkennungsinformation zur Transporteinrichtung sowie zur ersten und zweiten Sensorkomponente und der Bearbeitungskomponente gemäß der vorliegenden Beschreibung ausgebildet und eingerichtet sein.

Die vorstehend genannte Aufgabe wird ebenfalls gelöst durch ein Verfahren zum Einrichten eines Steuerungssystems gemäß der vorliegenden Beschreibung für ein Bearbeitungssystem gemäß der vorliegenden Beschreibung, umfassend die Schritte:
- Transportieren einer Erkennungsinformation gemäß der vorliegenden Beschreibung von der ersten zur zweiten Sensorkomponente und weiter zur Bearbeitungskomponente, und dabei:
- Erfassen der Erkennungsinformation durch die erste Sensorkomponente als erste Sensordaten sowie Erfassen eines ersten Erfassungszeitpunkts der ersten Sensordaten, und Übertragen des ersten Erfassungszeitpunkts an die Edge-Recheneinrichtung,
- Erfassen der Erkennungsinformation durch die zweite Sensorkomponente als zweite Sensordaten sowie Erfassen eines zweiten Erfassungszeitpunkts der zweiten Sensordaten, und Übertragen des zweiten Erfassungszeitpunkts an die Edge-Recheneinrichtung,
- Erfassen der Erkennungsinformation durch die Bearbeitungskomponente als dritte Sensordaten sowie Erfassen eines dritten Erfassungszeitpunkts der dritten Sensordaten, und Übertragen des dritten Erfassungszeitpunkts an die Edge-Recheneinrichtung,
- Ermitteln der mindestens einen Zeitinformation, wobei aus der mindestens einen Zeitinformation Transportzeiten eines auf der Transporteinrichtung transportierten Produkts von der ersten zur zweiten Sensorkomponente und weiter zur Bearbeitungskomponente ermittelbar sind oder ermittelt werden.

Das Verfahren zum Einrichten eines Steuerungssystems gemäß der vorliegenden Beschreibung kann beispielsweise ein Kalibrieren des Steuerungssystems in Bezug auf die mindestens eine Zeitinformation bzw. die Transportzeiten eines Produkts von der ersten zur zweiten Sensorkomponente und weiter zur Bearbeitungskomponente umfassen, oder als ein Kalibrieren des Steuerungssystems in Bezug auf die mindestens eine Zeitinformation bzw. die genannten Transportzeiten ausgebildet und eingerichtet sein.

Durch das genannte Verfahren zum Einrichten bzw. Kalibrieren eines Steuerungssystems, ist es möglich ein entsprechendes Bearbeitungssystem flexibler und einfacher an die Bearbeitung des Verarbeitungsprodukts anzupassen. Insbesondere lassen sich auf diese Weise einfach und flexibel verschiedenste Verarbeitungsprodukte durch entsprechende Sensorik spezifisch auf das einzelne Verarbeitungsprodukts hin angepasst bearbeiten.

Das Verfahren kann zumindest teilweise als ein Computerimplementiertes und/oder Computer-unterstütztes Verfahren ausgebildet und eingerichtet sein. In diesem Sinne können zumindest Teile der Verfahrensschritte, oder einzelne Verfahrensschritte, automatisiert und/oder Computer-implementiert ablaufen. Zumindest einzelne Verfahrensschritte oder Teile der Verfahrensschritte können auch teilautomatisiert und/oder Computer-unterstützt ablaufen.

Dabei können insbesondere die Verfahrensschritte des Erfassens der Erkennungsinformation durch die erste Sensorkomponente, durch die zweite Sensorkomponente sowie durch die Bearbeitungskomponente und die zugehörigen Verfahrensschritte automatisiert oder teilautomatisiert ablaufen bzw. als Computer-implementierte oder Computer-unterstützte Verfahrensschritte ausgebildet und eingerichtet sein. Die Ermittlung der mindestens einen Zeitinformation kann beispielsweise als ein Computer-implementierter Verfahrensschritt bzw. ein automatisiert ablaufender Verfahrensschritt ausgebildet und eingerichtet sein.

Weiterhin können neben dem Übertragen des ersten Erfassungszeitpunkts auch die ersten Sensordaten und/oder daraus abgeleitete Daten an die Edge-Recheneinrichtung übertragen werden. Neben dem Übertragen des zweiten Erfassungszeitpunkts können auch die zweiten Sensordaten und/oder daraus abgeleitete Daten an die Edge-Recheneinrichtung übertragen werden. Neben dem Übertragen des dritten Erfassungszeitpunkts können auch die dritten Sensordaten und/oder daraus abgeleitete Daten an die Edge-Recheneinrichtung übertragen werden.

Weiterhin kann die Bearbeitungskomponente einen Bearbeitungskomponenten-Sensor zum Erfassen der Erkennungsinformation als dritte Sensordaten umfassen. Dabei kann der Bearbeitungskomponenten-Sensor entsprechend einer Sensorkomponente gemäß der vorliegenden Beschreibung ausgebildet und eingerichtet sein. Beispielsweise kann der Bearbeitungskomponenten-Sensor als eine Kamera zur optischen Erfassung der Erkennungsinformation ausgebildet und eingerichtet sein.

Es kann beispielsweise vorgesehen sein, dass das Ermitteln der mindestens einen Zeitinformation computerimplementiert und/oder automatisiert in der EDGE-Recheneinrichtung ausgeführt wird.

Dabei kann die mindestens eine Zeitinformation beispielsweise derart ausgebildet und eingerichtet sein, dass aus der mindestens einen Zeitinformation Transportzeiten eines beliebigen auf der Transporteinrichtung transportierten Produkts von der ersten zur zweiten Sensorkomponente und weiter zur Bearbeitungskomponente ermittelbar sind oder ermittelt werden.

Die mindestens eine Zeitinformation kann daher beispielsweise aus der Transportzeiten eines beliebigen auf der Transporteinrichtung transportierten Produkts von der ersten zur zweiten Sensorkomponente und der Transportzeit dieses Produkts auf der Transporteinrichtung von der zweiten Sensorkomponente zur Bearbeitungskomponente bestehen oder diese Transportzeiten umfassen. Alternativ kann beispielsweise die mindestens eine Zeitinformation auch aus einer Transportzeit eines vermittels der Transport Einrichtung transportierten Produkts von der ersten Sensorkomponente zur zweiten Sensorkomponente sowie einer weiteren Transportzeit von der ersten Sensorkomponente zur Bearbeitungskomponente bestehen bzw. diese Information umfassen.

Die Zeitinformation kann beispielsweise ermittelt werden, indem beim Erfassen der Erkennungsinformation durch die erste Sensorkomponente eine erste Zeitinformation erfasst wird, die beispielsweise als ein sogenannter Zeitstempel ausgebildet und/oder weiteren Daten zugeordnet sein kann. Diese erste Zeitinformation kann beispielsweise ein Datum und eine Uhrzeit oder auch nur eine Uhrzeit oder eine Systemzeit umfassen oder auch als ein fortlaufender Zähler ausgebildet und eingerichtet sein. Dabei kann beispielsweise bekannt sein, wie groß der Zeitabstand zwischen zwei Einheiten des Zähler-Taktes ist.

Entsprechend kann dann die zweite Zeitinformation beim Erfassen der Erkennungsinformation durch die zweite Sensorkomponente sowie die dritte Zeitinformation beim Erfassen der Erkennungsinformation durch die Bearbeitungskomponente erfasst werden. Die Transportzeit von der ersten Sensorkomponente zur zweiten Sensorkomponente kann dann z.B. durch eine entsprechende Differenzbildung aus der ersten Zeitinformation und der zweiten Zeitinformation ermittelt werden. Entsprechend kann die Transportzeit von der zweiten Sensorkomponente zur Bearbeitungskomponente durch eine Differenzbildung der zweiten Zeitinformation und der dritten Zeitinformation bestimmt werden.

Nach dem Ermitteln der mindestens einen Zeitinformation kann dann nachfolgend beispielsweise weiterhin eine Übertragung der ermittelten mindestens einen Zeitinformation oder von daraus abgeleiteten Zeitinformationen, wie beispielsweise einer Transportzeit von der ersten zur zweiten Sensorkomponente sowie einer weiteren Transportzeit von der zweiten Sensorkomponente zur Bearbeitungskomponente, zum Steuerungsmodul des Steuerungssystems, oder einer Steuereinrichtung umfassend das Steuerungsmodul, erfolgen. Die übermittelte mindestens eine Zeitinformation, bzw. daraus abgeleitete Transportzeiten gemäß der vorliegenden Beschreibung, kann dann vom Steuerungsmodul im Rahmen einer Bearbeitung eines vermittels der Transporteinrichtung transportierten Verarbeitungsprodukts verwendet werden.

Alternativ wird die übermittelte mindestens eine Zeitinformation, bzw. daraus abgeleitete Transportzeiten gemäß der vorliegenden Beschreibung, dann vom Steuerungsmodul im Rahmen einer Bearbeitung eines vermittels der Transporteinrichtung transportierten Verarbeitungsprodukts verwendet.

Die vorstehend genannte Aufgabe wird weiterhin gelöst durch ein Verfahren zum Bearbeiten eines Verarbeitungs-Produkts mit einem Bearbeitungssystem gemäß der vorliegenden Beschreibung, welches ein gemäß der vorliegenden Beschreibung eingerichtetes und/oder kalibriertes Steuerungssystem umfasst, umfassend die Schritte:
- Speichern der mindestens einen Zeitinformation und/oder der Transportzeiten eines auf der Transporteinrichtung transportierten Produkts von der ersten zur zweiten Sensorkomponente und weiter zur Bearbeitungskomponente im Steuerungssystem,
- Erfassen des Verarbeitungs-Produkts mit der ersten Sensorkomponente zu einem ersten Erfassungszeitpunkt, Ermitteln einer ersten Produktinformation aus den erfassten ersten Sensordaten und Zuordnen des ersten Erfassungszeitpunkts zu der ersten Produktinformation,
- Erfassen des Verarbeitungsprodukts mit der zweiten Sensorkomponente zu einem zweiten Erfassungszeitpunkt, Ermitteln einer zweiten Produktinformation aus den erfassten zweiten Sensordaten und Zuordnen des zweiten Erfassungszeitpunkts zu der zweiten Produktinformation,
- Zuordnen der ersten und zweiten Produktinformation zueinander vermittels eines Abgleichs einer Zeitdifferenz zwischen erstem und zweitem Erfassungszeitpunkt und der ermittelten Transportzeit eines auf der Transporteinrichtung transportierten Produkts von der ersten zur zweiten Sensorkomponente,
- Bearbeiten des Verarbeitungsprodukts durch die Bearbeitungskomponente zu oder ab einem dritten Zeitpunkt, welcher sich aus dem zweiten Erfassungszeitpunkt sowie der ermittelten Transportzeit eines auf der Transporteinrichtung transportierten Produkts von der zweiten Sensorkomponente zur Bearbeitungskomponente ergibt.

Das Verfahren kann z.B. als ein computerimplementiertes Verfahren ausgebildet und eingerichtet sein. Weiterhin können alle Verfahrensschritte des Verfahrens als computerimplementierte Verfahrensschritte oder das zusammen Verfahrensschritte ausgebildet und eingerichtet sein. Es kann auch vorgesehen sein, eine Auswahl der Verfahrensschritte des Verfahrens als computerimplementierte Verfahrensschritte oder computerunterstützte Verfahrensschritte ausgebildet und eingerichtet sind.

Weiterhin müssen die Verfahrensschritte des genannten Verfahrens nicht zwangsläufig hintereinander oder in der vorgegebenen Reihenfolge ablaufen. Sie können beispielsweise teilweise auch gleichzeitig oder auch in einer anderen Reihenfolge ablaufen.

Ein gemäß einem Verfahren gemäß der vorliegenden Beschreibung zum Einrichten und/oder Kalibrieren eines Steuerungssystems gemäß der vorliegenden Beschreibung eingerichtetes Steuerungssystem kann z.B. derart ausgebildet und eingerichtet sein, dass die ermittelte mindestens eine Zeitinformation, und/oder die aus der mindestens einen Zeitinformation ermittelten Transportzeiten, Eingangsgrößen für die Steuerung des Bearbeitungssystems im Rahmen eines Bearbeitens des Verarbeitungs-Produkts sind. Die ermittelte mindestens eine Zeitinformation, und/oder die aus der mindestens einen Zeitinformation ermittelten Transportzeiten, können dabei z.B. Eingangsgrößen für ein Steuerprogramm zur Steuerung des Bearbeitungssystems im Rahmen eines Bearbeitens des VerarbeitungsProdukts sein.

Dies wird nachfolgend beispielhaft erläutert: So kann eine Steuerung der Bearbeitungskomponente beispielsweise derart erfolgen, dass, wenn ein Verarbeitungsprodukt vermittels der Transporteinrichtung die Bearbeitungskomponente erreicht hat, ein Bearbeitungszeitpunkt ermittelt wird, der dem Zeitpunkt des Erreichens der Bearbeitungskomponente entspricht. Dann wird aus den bekannten Transportzeiten von der ersten Sensorkomponente zur zweiten Sensorkomponente sowie von der zweiten Sensorkomponente zur Bearbeitungskomponente ermittelt, zu welchem Zeitpunkt das Verarbeitungsprodukts bei der ersten Sensorkomponente war und zu welchem Zeitpunkt bei der zweiten Sensorkomponente. Es wird dann die zu den jeweiligen Zeitpunkten von der ersten und zweiten Sensorkomponente jeweils ermittelte Produktinformation herangezogen, um auf Basis dieser Produktinformationen das Bearbeitungs-Produkt durch die Bearbeitungskomponente zu bearbeiten.

So kann beispielsweise am Beispiel einer Recyclinganlage, bei welcher die Bearbeitungskomponente aus einem Roboter besteht, welcher verschiedene Verarbeitungsprodukte in verschiedene Material-typische Behälter sortiert, die Anlage derart ausgebildet und eingerichtet sein, dass anhand der ersten und zweiten Produktinformation eine Materialidentifikation stattfinden kann. So kann beispielsweise anhand einer als Kamera ausgebildeten ersten Sensoreinrichtung sowie als Magnetsensor ausgebildeten zweiten Sensoreinrichtung eine entsprechende Materialklassifizierung erfolgen, anhand welcher dann der Roboter die jeweiligen Verarbeitungsprodukte in die entsprechenden Behälter sortieren kann.

Vermittels eines Verfahrens zum Einrichten und/oder Kalibrieren des Steuerungssystems gemäß der vorliegenden Beschreibung kann dann beispielsweise in regelmäßigen Zeitabständen, und/oder wenn beispielsweise Transportparameter des Transportbands oder auch Lagen der Sensoren oder der Bearbeitungskomponente verändert wurden, neu kalibriert werden. Auf diese Weise stehen jeweils die aktuellen Transportzeiten von auf der Transporteinrichtung transportierten Verarbeitungsprodukten zur Verfügung.

Zur Kalibrierung können beispielsweise entsprechende Kalibrier-Markierungen oder -Komponenten am Transportband angebracht oder aufgedruckt sein, welche beispielsweise eine Erkennungsinformation gemäß der vorliegenden Beschreibung umfassen können. Weiterhin können auch spezielle Kalibrier-Produkte vorgesehen sein, welche ebenfalls eine Erkennungsinformation gemäß der vorliegenden Beschreibung umfassen können, und welche bei Bedarf der Transporteinrichtung zum Transport zur Verfügung gestellt werden oder werden können - also beispielsweise auf einem Transportband oder Transport-Träger abgelegt werden oder werden können.

Es kann beispielsweise vorgesehen sein, dass aktuell geltende Zeitinformationen und/oder Transportzeiten gemäß der vorliegenden Beschreibung im Steuerungsmodul oder einer Steuereinrichtung, welche das Steuerungsmodul umfasst, gespeichert sind und von einem im Steuerungsmodul ablaufenden Steuerprogramm benutzt werden, um ein von der Transporteinrichtung gefördertes Verarbeitungsprodukts zu bearbeiten.

Werden, beispielsweise durch ein Verfahren zum Einrichten eines Steuerungssystems gemäß der vorliegenden Beschreibung, neue, aktualisierte Zeitinformationen und/oder entsprechende Transportzeiten ermittelt, werden die im Steuerungsmodul, oder der Steuereinrichtung mit dem Steuerungsmodul, abgespeicherten Zeitinformationen und/oder Transportzeiten entsprechend aktualisiert. Diese Weise ist sichergestellt, dass bei der Verarbeitung von Verarbeitungsprodukten durch die Bearbeitungskomponente jeweils immer die aktuellsten Zeitinformationen und/oder Transportzeiten zur Verfügung stehen.

Weitere vorteilhafte Ausgestaltungen finden sich in den Unteransprüchen.

Im Folgenden wird die Erfindung beispielhaft mit Bezug auf die beigefügte Zeichnung näher erläutert.

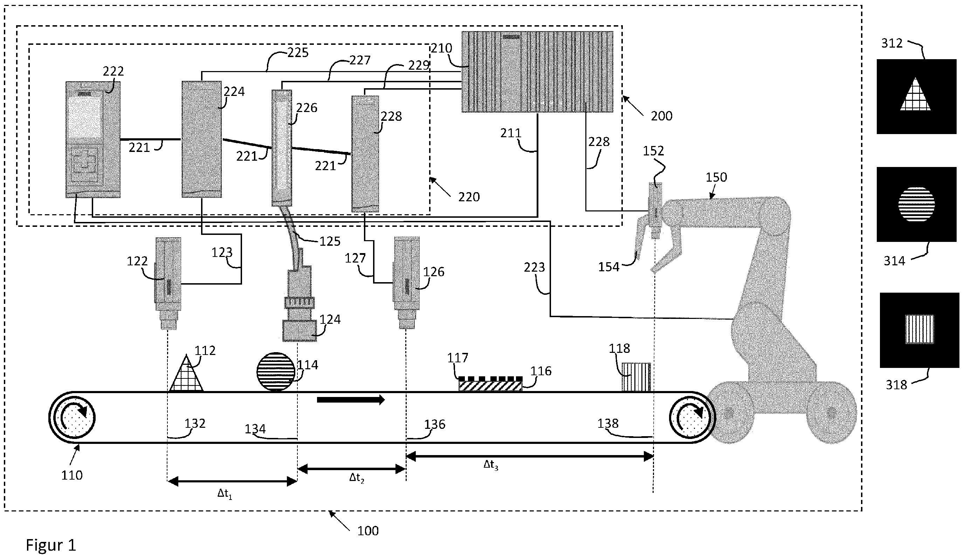

Figur 1 zeigt: Eine schematische Darstellung eines Mülltrennungs-Systems.

In Figur 1 ist ein Mülltrennungs-System 100 dargestellt, bei welchem auf einem Transportband 110 verschiedene Müll-Gegenstände 112, 114, 118 einem Roboter 150 zugeführt werden, welcher diese dann mit einem Greifer 154 aufnimmt und auf entsprechende Aufnahmebehälter 312, 314, 318 verteilt.

Dabei symbolisieren die in Figur 1 dargestellten Formen der Müll-Gegenstände 112, 114, 118 verschiedene Materialien. So wird ein erstes Kunststoffmaterial durch ein Dreieck 112 symbolisiert, ein metallisches magnetisches Material durch einen Kreis 114 sowie ein zweites Kunststoffmaterial durch ein Quadrat 118. Die entsprechenden Symbole finden sich auch auf in Figur 1 dargestellten Aufnahmebehältern 312, 314, 318, so dass Gegenstände aus dem ersten Kunststoffmaterial in dem Behälter mit dem Dreieck-Symbol 312, Gegenstände aus dem metallischen magnetischen Material in dem Behälter mit dem kreisförmigen Symbol 314 und Gegenstände aus dem zweiten Kunststoffmaterial in dem Behälter mit dem quadratischen Symbol 318 abgelegt werden.

Der Roboter 150 hat nun die Aufgabe, Gegenstände aus dem ersten Kunststoffmaterial 112 in den Behälter 312 für dieses erste Kunststoffmaterial zu transportieren, Gegenstände aus dem metallischen magnetischen Material 114 in den Behälter 314 für diese metallische magnetischen Materialien, sowie Gegenstände aus dem zweiten Kunststoffmaterial 118 in den entsprechenden Behälter 318 für dieses zweite Kunststoffmaterial.

Weiterhin umfasst das Mülltrennungs-System 100, welches ein Beispiel für ein Bearbeitungssystem 100 gemäß der vorliegenden Beschreibung ist, eine sogenannte hyperspektrale Zeilenkamera 122, welche über maschinelles Lernen befähigt ist, verschiedene Kunststoffmaterialien zu klassifizieren. Weiterhin umfasst das Mülltrennungs-System 100 einen Magnetsensor 124 zur Erkennung von metallischen magnetischen Objekten und eine RGB-Kamera 126 zur Erkennung einer Lage eines Gegenstands sowie von dessen Form und Größe. Anhand der hyperspektralen Zeilenkamera 122 lassen sich verlässliche Informationen beispielsweise zur Identifikation verschiedener Kunststoffmaterialien ermitteln. Über den Magnetsensor 124 lässt sich bestimmen, ob es sich um ein metallisches magnetisches Material handelt, und über die RGB-Kamera können beispielsweise eine Position, Lagedaten und Form-Daten eines Objekts bestimmt werden, welche dem Roboter 150 helfen, einen auf dem Transportband 110 transportierten Gegenstand 112, 114, 118 entsprechend identifizieren und/oder greifen zu können.

Der Roboter 150 umfasst eine eigene Roboter-Kamera 152, welchem dem Roboter beim Identifizieren und Greifen eines auf dem Transportband 110 transportierten Gegenstands 112, 114, 116, 118 unterstützt bzw. ihm ein solches Identifizieren und Greifen ermöglicht. Weiterhin umfasst der Roboter 150 den Greifer 154 zum Greifen eines auf dem Transportband 110 transportierten Gegenstands 112, 114, 118.

Das Mülltrennung-System 100 umfasst weiterhin ein Steuerungssystem 200, welches ein EDGE-Device 210 umfasst, welches ein Beispiel für eine Edge-Recheneinrichtung 210 gemäß der vorliegenden Beschreibung darstellt. Weiterhin umfasst das Steuerungssystem 200 eine Steuereinrichtung 220, welche als eine modulare speicherprogrammierbare Steuerung (SPS) 220 ausgebildet und eingerichtet ist. Die SPS 220 umfasst dabei ein CPU-Modul 222, welches ein Beispiel für ein Steuerungsmodul 222 gemäß der vorliegenden Beschreibung darstellt. Im Steuerungsmodul 222 ist ein Steuerungsprogramm zur Steuerung des Mülltrennungs-Systems 100, und insbesondere des Roboters 150, gespeichert. Weiterhin umfasst die SPS 220 ein Kameramodul 224, welches über eine Ethernet-Verbindung 123 mit der hyperspektralen Zeilenkamera 122 verbunden ist, ein Eingabe-Ausgabe-Modul 226, welches über eine Feldbusverbindung 125 mit dem Magnetsensor 124 verbunden ist, sowie ein ML-Modul 228, welches zur Bildanalyse mittels maschineller Lernverfahren (ML) ausgebildet und eingerichtet ist und über eine Ethernet-Verbindung 127 mit der RGB-Kamera 126 verbunden ist. Das CPU-Modul 222, das Kameramodul 224, das Eingabe-Ausgabe-Modul 226, sowie das ML-Modul 128 sind über einen Rückwandbus 221 der SPS 220 kommunikativ verbunden.

Das Mülltrennungs-System 100 ist dafür ausgelegt, sehr viele Gegenstände 112, 114, 118, transportieren und zu sortieren. Die Zeiten zu kennen, welche der Gegenstand 118, der sich aktuell unter dem Greifer 154 des Roboters 150 befindet, von der hyperspektralen Zeilenkamera 122 zum Magnetsensor 124, dann weiter zur RGB-Kamera 126, und von dort zum Greifer 154 des Roboters 150 benötigt hat, ist dabei eine Möglichkeit, dem Roboter 150 die Informationen zur Verfügung zu stellen, die er benötigt, um diesen Gegenstand 118 dann nachfolgend in den richtigen Container 318 zu bewegen.

Dies wird nachfolgend näher erläutert: In Figur 1 ist eine Transportzeit von der hyperspektralen Kamera 122 zum Magnetsensor 124 als Δt₁ eingetragen, die Transportzeit vom Magnetsensor 124 zur RGB-Kamera 126 als Δt₂, sowie die Transportzeit von der RGB-Kamera 126 zum Greifer des Roboters 154 als Δt₃. Erreicht nun der zu sortieren Gegenstand 118 den Greifer 154 des Roboters 150 zu einem Zeitpunkt T, werden aus den gemessenen Sensordaten der hyperspektralen Kamera 122 diejenigen herausgesucht, die zu einem Zeitpunkt T - Δt₁ - Δt₂ - Δt₃ gemessen wurden. Weiterhin werden aus den Daten des Magnetsensors 124 die Daten herausgesucht, welche zu einem Zeitpunkt T - Δt₃ - Δt₂ gemessen wurden. Und aus den Daten der RGB-Kamera 126 werden diejenigen herausgesucht, welche zu einem Zeitpunkt T - Δt₃ gemessen wurden. Diese Auswahl (zumindest unter anderem) durch das im CPU-Modul 222 ablaufende Steuerprogramm ausgeführt. Anhand der ermittelten Daten wird dann vom Steuerprogramm weiterhin ermittelt, aus welchem Material der Gegenstand 118 am Greifer 154 besteht, und der Roboter 150 dann so angesteuert, dass der Gegenstand 118 in dem zugehörigen Behälter 318 abgelegt wird.

Im vorliegenden Fall befindet sich der quadratische Gegenstand 118 aus dem zweiten Kunststoffmaterial unterhalb des Greifers 114. Vermittels der Roboterkamera 152 wird dabei der quadratische Gegenstand 118 erfasst und der Erfassungszeitpunkt T ermittelt. Gemäß der vorstehend dargestellten Vorgehensweise folgt dann aus den Daten der hyperspektralen Kamera 122, dass es sich um das zweite Kunststoffmaterial handelt, der Magnetsensor 124 hat kein magnetisches Material detektiert und die RGB-Kamera hat die zugehörige Lage und einen möglichen Greifpunkt des Gegenstands 118 ermittelt. Aufgrund dieser Daten bestimmt das Steuerprogramm, welches in der CPU-Modul abläuft, dass der quadratische Gegenstand 118 aus dem zweiten Kunststoffmaterial besteht, und an welchen Punkten der Greifer 154 ansetzen muss, um diesen zu fassen. Das Steuerprogramm steuert dann die Ablage des quadratischen Gegenstands 118 durch den Roboter 150 in den zugehörigen Ablagebehälter 318.

Zur Ermittlung der genannten Transportzeiten Δt1, Δt2 und Δt3 ist weiterhin ein Kalibrierelement 116 vorgesehen, welches einen Barcode 117 umfasst. Der Barcode 117 ist ein Beispiel für eine Erkennungsinformation 117 gemäß der vorliegenden Beschreibung.

Zur Kalibrierung des Mülltrennungs-Systems 110 bezüglich der Transportzeiten Δt₁, Δt₂ und Δt₃ wird nun das Kalibrierelement 116 auf das Transportband 110 gelegt und von der hyperspektralen Kamera 122 über den Magnetsensor 124, die RGB-Kamera 126 bis zum Greifer 154 des Roboters 150 mit seiner Kamera 152 transportiert. Beim Erreichen der hyperspektralen Kamera 122 erkennt diese anhand des Barcodes 117, dass es sich um das Kalibrierelement 116 handelt und erfasst den Zeitpunkt, zu welchem Kalibrierelement Element 116 die optische Achse 132 der hyperspektralen Kamera 122 passiert. Die Erkennung des Kalibrierelements 116 durch den Magnetsensor 124 kann entweder so erfolgen, dass der Barcode 117 aus magnetischen Materialien hergestellt ist, und anhand dieser der Magnetsensor 124 den Barcode 117 erkennen kann. Alternativ kann auch vorgesehen sein, dass der Magnetsensor 124 eine eigene optische Kamera umfasst. Diese kann den unterhalb des Magnetsensors 124 befindlichen Gegenstand optisch erkennen und dann anhand des Barcodes feststellen, ob und/oder wann sich das Kalibrierelement 116 unter dem Magnetsensor 124 befindet.

Nachdem der Magnetsensor 124 vermittels beispielsweise einer der beiden vorstehend genannten Methoden die Erkennungsinformation 117 des Kalibrierelements 116 detektiert hat, wird auch hier wiederum die Zeit erfasst, bei welcher das Kalibrierelement 116 eine Meßachse 134 des Magnetsensors 134 passiert hat.

Die RGB-Kamera 126 erkennt optisch den Barcode 117 des Kalibrierelements 116 und erfasst dann ebenfalls die Zeit, zu welcher das Kalibrierelement 116 die optische Achse 136 der RGB-Kamera 136 passiert hat. Ebenso kann die Roboterkamera 152 nachfolgend den Barcode 117 des Kalibrierelements 116 erfassen, und wiederum die Zeit T ermitteln, zu welcher das Kalibrierelement 116 die optische Achse 138 der Roboterkamera 152 passiert bzw. erreicht.

Die Ermittlung des Zeitpunkts, zu welchem Kalibrierelement 116 die Hyperspektral-Kamera 122 passiert, kann beispielsweise erfolgen, indem die Erkennung, dass es sich bei dem aktuell erfassten Bild um das Kalibrierelement 116 handelt, im Kamera-Modul 224 der SPS 220 erfolgt und im Kameramodul 224 dann auch der Zeitpunkt festgehalten wird, zu welchem das gerade erfasste Bild aufgenommen wurde. Dieser Zeitpunkt wird dann zusammen mit der Information, dass es sich um Kalibrierelement 116 handelt über einen Feldbus 225 an das Edge-Device 210 übermittelt. In gleicher Weise wird das Kalibrierelement 116 vom dem Magnetsensor 124 zugeordneten Eingabe-Ausgabe-Modul 226 erkannt, die entsprechende Zeit festgehalten und entsprechend über einen Feldbus 227 ebenfalls an das Edge-Device übermittelt. Genauso wird Kalibrierelement 116 über das mit der RGB-Kamera 226 verbundene ML-Modul 228 erkannt und der entsprechende Aufnahme-Zeitpunkt festgehalten und über einen Feldbus 229 an das Edge-Device 210 übermittelt.

Die Roboterkamera 152 umfasst eine eigene Bildauswerteeinrichtung zur Erkennung des Kalibrierelements 116 und zudem die Möglichkeit, einen entsprechenden Aufnahmezeitpunkt zu ermitteln. Nachdem das Kalibrierelement 116 auch die Roboterkamera 152 erreicht hat, wird diese vom Bildauswertesystem der Roboterkamera 152 erkannt, der entsprechende Zeitpunkt, zu welchem das Kalibrierelement 116 die optische Achse der Roboterkamera 138 erreicht hat, wird festgehalten und diese Zeit über einen weitere Feldbusverbindung 228 an das Edge-Device 210 übermittelt.

Aus den gemessenen Zeiten, zu welchen das Kalibrierelement 116 die jeweiligen Sensoren 122, 124, 126, 152 passiert hat, werden dann die Transportzeiten Δt₁, Δt₂ und Δt₃ vom Edge-Device 210 berechnet. Diese Transportzeiten stellen ein Ausführungsbeispiel der mindestens einen Zeitinformation gemäß der vorliegenden Beschreibung dar. Die vorstehend genannte Berechnung dieser Transportzeiten stellt ein Ausführungsbeispiel für die Ermittlung der mindestens einen Zeitinformation gemäß der vorliegenden Beschreibung dar.

Über eine OPC-UA Kommunikationsverbindung werden dann diese Zeiten Δt₁, Δt₂ und Δt₃ dem CPU-Modul 222 der SPS 220 zugeführt, dort gespeichert und für die nächst-folgenden Sortiervorgänge der vom Transportband 110 transportierten Gegenstände 112, 114, 118 verwendet.

Das Kalibrierelement 116 kann beispielsweise immer dann auf das Transportband 110 gelegt und zur Kalibrierung des Mülltrennungs-Systems 100 verwendet werden, wenn beispielsweise ein Einstellparameter, wie beispielsweise eine Geschwindigkeit des Transportbands 110, geändert wurde. Weiterhin kann eine entsprechende Kalibrierung des Mülltrennung-Systems 100 vermittels des Kalibrierelements 116 auch in regelmäßigen Zeitabständen vorgenommen werden um beispielsweise regelmäßig die Transportzeiten Δt₁, Δt₂ und Δt₃ zu überprüfen um beispielsweise eine Veränderung der Transportbedingungen durch äußere Umstände wie Temperatur, Luftfeuchtigkeit, Erwärmung von Motoren oder ähnlichem zu erkennen und zu berücksichtigen.

Das Kalibrierelement 116 kann beispielsweise auch fest oder lösbar mit dem Transportband 110 verbunden sein. In einer alternativen Ausgestaltung kann auch der Barcode 117 als Erkennungsinformation auf dem Transportband 110 aufgedruckt sein. Auf diese Weise kann beispielsweise erreicht werden, dass eine Kalibrierung des Mülltrennungs-Systems 100 in regelmäßigen Zeitabständen erfolgt - in der vorliegenden Ausgestaltung ein Mal pro Umdrehung des Transportbands.

In einer weiteren Ausgestaltung können auch mehrere Kalibrierelemente 116 auf dem Transportband fixiert oder lösbar fixiert sein. Dabei kann jedes der Kalibrierelemente den gleichen Barcode 117 oder, vorteilhafter Weise, auch verschiedene Barcodes 117 umfassen. In einer alternativen Ausgestaltung kann auch der Barcode 117 mehrfach auf dem Transportband aufgedruckt sein, oder auch verschiedene Barcodes 117 auf dem Transportband aufgedruckt sein.

Auf diese Weise wird eine noch häufigere Kalibrierung des Mülltrennungs-Systems erreicht. So können dann beispielsweise Veränderungen des Mülltrennungs-Systems 100 beispielsweise durch Driften bei der Transportbandbewegung oder der Sensorik noch zeitnaher und genauer korrigiert werden.

Die Verwendung des EDGE-Devices 210 zur Berechnung der Kalibrierungsparameter und Datensammlung der dafür notwendigen Informationen verbessert die Performance des Mülltrennung-Systems 100. Die Verwendung des EDGE-Devices 210 wie beschrieben für die Kalibrierung des Mülltrennung-Systems 100 entlastet die SPS 220, so dass die Echtzeitsteuerungs-Abläufe, welche durch die SPS 220 gesteuert werden (z.B. das Sortieren der Müll-Gegenstände 112, 114, 118 in die entsprechenden Behälter 312, 314, 318), nicht durch die Kalibrierung verzögert werden, insbesondere nicht z.B. durch die für die Erkennung, Sammlung und Verarbeitung von für die Kalibrierung notwendigen Daten verzögert werden.

## Patentansprüche

1. Steuerungssystem (200) für die Bearbeitung eines auf einer Transporteinrichtung (110) von einer ersten zu einer zweiten Sensorkomponente (122, 124, 126) und weiterhin zu einer Bearbeitungskomponente (150) transportierten Verarbeitungs-Produkts (112, 114, 118), umfassend:
eine Steuereinrichtung (220) mit
- mindestens einem Applikationsmodul (224, 226, 228) zum Anschluss der ersten Sensorkomponente (122, 124, 126) und der zweiten Sensorkomponente (122, 124, 126),
- sowie einem Steuerungsmodul (222),
wobei die erste und zweite Sensorkomponente (122, 124, 126) zur Erfassung von ersten und zweiten Sensordaten bezüglich des Verarbeitungs-Produkts (112, 114, 118), die Bearbeitungskomponente (150) zum Bearbeiten, Verarbeiten und/oder Manipulieren des Verarbeitungs-Produkts (112, 114, 118), und das Steuerungsmodul (222) zum Ablauf eines Steuerprogramms zur Steuerung der Bearbeitungskomponente (150) ausgebildet und eingerichtet ist,
wobei das Steuerungssystem (200) weiterhin eine Edge-Recheneinrichtung (210) umfasst, welche zur Ermittlung mindestens einer Zeitinformation ausgebildet und eingerichtet ist, wobei aus der mindestens einen Zeitinformation Transportzeiten eines auf der Transporteinrichtung transportierten Produkts (112, 114, 116, 118) von der ersten zur zweiten Sensorkomponente (122, 124, 126) und weiter zur Bearbeitungskomponente (150) ermittelbar sind oder ermittelt werden,
und wobei das Steuerungsmodul (222) zum Ablauf eines Steuerprogramms zur Echtzeitsteuerung der Bearbeitungskomponente (150) zur Bearbeitung des Verarbeitungsprodukts (112, 114, 118) unter Berücksichtigung der ersten und zweiten Sensordaten sowie der Zeitinformation und/oder der ermittelten Transportzeiten ausgebildet und eingerichtet ist.

2. Steuerungssystem gemäß Anspruch 1,
**dadurch gekennzeichnet,**
**dass** das mindestens eine Applikationsmodul (122, 124, 126) zur Ermittlung einer ersten Produktinformation unter Verwendung der ersten Sensordaten und einer zweiten Produktinformation unter Verwendung der zweiten Sensordaten ausgebildet und eingerichtet ist,
und **dass** das Steuerungsmodul (222) zum Ablauf eines Steuerprogramms zur Echtzeitsteuerung der Bearbeitungskomponente (150) zur Bearbeitung des Verarbeitungsprodukts (112, 114, 118) unter Berücksichtigung der ersten und zweiten Produktinformation bezüglich des Verarbeitungsprodukts (112, 114, 118) sowie der Zeitinformation und/oder der ermittelten Transportzeiten ausgebildet und eingerichtet ist.

3. Steuerungssystem gemäß Anspruch 2,
**dadurch gekennzeichnet,**
**dass** das mindestens eine Applikationsmodul (122, 124, 126) ein erstes ML-Modell zur Ermittlung der ersten Produktinformation und/oder ein zweites ML-Modell zur Ermittlung der zweiten Produktinformation umfasst.

4. Steuerungssystem nach einem der Ansprüche 1 bis 3,
**dadurch gekennzeichnet,**
**dass** die Transporteinrichtung (110) mindestens eine Erkennungsinformation (117) umfasst, wobei die mindestens ein Erkennungsinformation (117) und/oder die erste und zweite Sensorkomponente (122, 124, 126) sowie die Bearbeitungskomponente (150) derart ausgebildet und eingerichtet sind, dass die mindestens eine Erkennungsinformation (117) von der ersten und zweiten Sensorkomponente (122, 124, 126) sowie der Bearbeitungskomponente (150) erfassbar ist oder erfasst wird.

5. Bearbeitungssystem (100) für ein Verarbeitungs-Produkt (112, 114, 118), umfassend:
- ein Steuerungssystem (200) gemäß einem der Ansprüche 1 bis 4,
- eine erste Sensorkomponente (122, 124, 126) gemäß einem der Ansprüche 1 bis 4 zum Anschluss an das mindestens eine Applikationsmodul (224, 226, 228) der Steuereinrichtung (220) zur Erfassung von ersten Sensordaten bezüglich des Verarbeitungs-Produkts (112, 114, 118),
- eine zweite Sensorkomponente (122, 124, 126) gemäß einem der Ansprüche 1 bis 4 zum Anschluss an das mindestens eine Applikationsmodul (224, 226, 228) der Steuereinrichtung (220) zur Erfassung von zweiten Sensordaten bezüglich des Verarbeitungs-Produkts (112, 114, 118),
- eine Bearbeitungskomponente (150) gemäß einem der Ansprüche 1 bis 4 zum Bearbeiten, Verarbeiten und/oder Manipulieren des Verarbeitungs-Produkts (112, 114, 118), sowie
- eine Transporteinrichtung (110) gemäß einem der Ansprüche 1 bis 4 zum Transport des Verarbeitungsprodukts (112, 114, 118) von der ersten zu der zweiten Sensorkomponente (122, 124, 126) und weiterhin zu der Bearbeitungskomponente (150).

6. Bearbeitungssystem gemäß Anspruch 5,
**dadurch gekennzeichnet,**
**dass** die Transporteinrichtung (110) mindestens eine Erkennungsinformation (117) umfasst, wobei die mindestens ein Erkennungsinformation (117) und/oder die erste und zweite Sensorkomponente (122, 124, 126) sowie die Bearbeitungskomponente (150) derart ausgebildet und eingerichtet sind, dass die mindestens eine Erkennungsinformation (117) von der ersten und zweiten Sensorkomponente (122, 124, 126) sowie der Bearbeitungskomponente (150) erfassbar ist oder erfasst wird.

7. Verfahren zum Einrichten eines Steuerungssystems (200) gemäß einem der Ansprüche 1 bis 4 für ein Bearbeitungssystem (110) gemäß Anspruch 6, umfassend die Schritte:
- Transportieren einer ersten Erkennungsinformation (117) der mindestens einen Erkennungsinformation (117) von der ersten zur zweiten Sensorkomponente (122, 124, 126) und weiter zur Bearbeitungskomponente (150), und dabei:
- Erfassen der ersten Erkennungsinformation (117) durch die erste Sensorkomponente (122, 124, 126) als erste Sensordaten sowie Erfassen eines ersten Erfassungszeitpunkts der ersten Sensordaten, und Übertragen des ersten Erfassungszeitpunkts an die Edge-Recheneinrichtung (210),
- Erfassen der ersten Erkennungsinformation (117) durch die zweite Sensorkomponente (122, 124, 126) als zweite Sensordaten sowie Erfassen eines zweiten Erfassungszeitpunkts der zweiten Sensordaten, und Übertragen des zweiten Erfassungszeitpunkts an die Edge-Recheneinrichtung (210),
- Erfassen der ersten Erkennungsinformation (117) durch die Bearbeitungskomponente (150) als dritte Sensordaten sowie Erfassen eines dritten Erfassungszeitpunkts der dritten Sensordaten, und Übertragen des dritten Erfassungszeitpunkts an die Edge-Recheneinrichtung,
- Ermitteln der mindestens einen Zeitinformation, wobei aus der mindestens einen Zeitinformation Transportzeiten eines auf der Transporteinrichtung transportierten Produkts von der ersten zur zweiten Sensorkomponente und weiter zur Bearbeitungskomponente ermittelbar sind oder ermittelt werden.

8. Verfahren zum Bearbeiten eines Verarbeitungs-Produkts (112, 114, 118) mit einem Bearbeitungssystem (100) gemäß Anspruch 5 oder 6, welches ein gemäß Anspruch 7 eingerichtetes Steuerungssystem (200) umfasst, umfassend die Schritte:
- Speichern der mindestens einen Zeitinformation und/oder der Transportzeiten eines auf der Transporteinrichtung transportierten Produkts (112, 114, 116, 118) von der ersten zur zweiten Sensorkomponente (122, 124, 126) und weiter zur Bearbeitungskomponente (150) im Steuerungssystem (200),
- Erfassen des Verarbeitungs-Produkts (112, 114, 118) mit der ersten Sensorkomponente (122, 124, 126) zu einem ersten Erfassungszeitpunkt, Ermitteln einer ersten Produktinformation aus den erfassten ersten Sensordaten und Zuordnen des ersten Erfassungszeitpunkts zu der ersten Produktinformation,
- Erfassen des Verarbeitungsprodukts (112, 114, 118) mit der zweiten Sensorkomponente (122, 124, 126) zu einem zweiten Erfassungszeitpunkt, Ermitteln einer zweiten Produktinformation aus den erfassten zweiten Sensordaten und Zuordnen des zweiten Erfassungszeitpunkts zu der zweiten Produktinformation,
- Zuordnen der ersten und zweiten Produktinformation zueinander vermittels eines Abgleichs einer Zeitdifferenz zwischen erstem und zweitem Erfassungszeitpunkt und der ermittelten Transportzeit eines auf der Transporteinrichtung (110) transportierten Produkts von der ersten zur zweiten Sensorkomponente (122, 124, 126),
- Bearbeiten des Verarbeitungsprodukts durch die Bearbeitungskomponente zu oder ab einem dritten Zeitpunkt, welcher sich aus dem zweiten Erfassungszeitpunkt sowie der ermittelten Transportzeit eines auf der Transporteinrichtung (110) transportierten Produkts von der zweiten Sensorkomponente (122, 124, 126) zur Bearbeitungskomponente (150) ergibt.
